(19) Europäisches Patentamt
European Patent Office
Office européen des brevets

(11) EP 3 533 855 A1

(12) # EUROPEAN PATENT APPLICATION
published in accordance with Art. 153(4) EPC

(43) Date of publication:
**04.09.2019 Bulletin 2019/36**

(21) Application number: **17866301.9**

(22) Date of filing: **20.07.2017**

(51) Int Cl.:
***C09K 19/30*** *(2006.01)* ***C09K 19/12*** *(2006.01)*
***C09K 19/14*** *(2006.01)* ***C09K 19/20*** *(2006.01)*
***C09K 19/32*** *(2006.01)* ***C09K 19/34*** *(2006.01)*
***G02F 1/13*** *(2006.01)*

(86) International application number:
**PCT/JP2017/026281**

(87) International publication number:
**WO 2018/078968 (03.05.2018 Gazette 2018/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **27.10.2016 JP 2016210418**

(71) Applicants:
- **JNC Corporation**
  **Chiyoda-ku**
  **Tokyo 100-8105 (JP)**
- **JNC Petrochemical Corporation**
  **Tokyo 100-0004 (JP)**

(72) Inventors:
- **MATSUDA Naoko**
  **Ichihara-shi**
  **Chiba 290-8551 (JP)**
- **KURIHARA Eriko**
  **Ichihara-shi**
  **Chiba 290-8551 (JP)**
- **SAITO Masayuki**
  **Ichihara-shi**
  **Chiba 290-8551 (JP)**

(74) Representative: **TBK**
**Bavariaring 4-6**
**80336 München (DE)**

(54) **LIQUID CRYSTAL COMPOSITION FOR LIGHT CONTROL USE, AND LIQUID CRYSTAL LIGHT-CONTROLLING ELEMENT**

(57) The object is to provide a liquid crystal composition for dimming that satisfies at least one of characteristics such as a high maximum temperature, a low minimum temperature, a small viscosity, a large optical anisotropy and a large positive dielectric anisotropy, or that is suitably balanced between at least two of these characteristics, and to provide a liquid crystal dimming device including this composition. Provided is a liquid crystal composition for dimming that includes a specific compound having a large positive dielectric anisotropy as a first component and that may include a specific compound having a high maximum temperature or a low minimum temperature as a second component and a specific compound having a large dielectric anisotropy in the minor axis direction as a third component.

EP 3 533 855 A1

## Description

[Technical field]

The invention relates to a liquid crystal composition for dimming and a liquid crystal dimming device having a dimming function.

A dimming device is a device that adjusts the transmittance of light. An electrochromic compound or a liquid crystal compound is used for the device. The liquid crystal compound is used as a light shatter since its arrangement can be adjusted by applying a voltage. One example is a liquid crystal device in which a polarizer or a color filter is combined with the liquid crystal compound. Another example is a liquid crystal dimming device.

The liquid crystal dimming device is used for building materials such as window glasses or the partition of a room, automobile parts and so forth. Soft substrates such as plastic films are used for these devices in addition to hard substrates such as glass substrates. In a liquid crystal composition sandwiched between these substrates, the arrangement of liquid crystal molecules can be changed by adjusting applied voltage. Light that transmits the liquid crystal composition is adjusted by this method so that the liquid crystal dimming device can be used for dimming windows or smart windows (see patent documents No. 1 and No. 2).

Such a device includes a liquid crystal composition having a nematic phase. This composition has suitable characteristics. A device having good characteristics can be obtained by improving the characteristics of this composition. Table 1 below summarizes the relationship between these characteristics. The characteristics of the composition will be further explained on the basis of a device. The temperature range of a nematic phase relates to the temperature range in which the device can be used. A desirable maximum temperature of the nematic phase is approximately 90 °C or higher and a desirable minimum temperature of the nematic phase is approximately -20 °C or lower. The viscosity of the composition relates to the response time of the device. A short response time is desirable for adjusting the transmittance of light. Response time that is one millisecond shorter than that of the other devices is desirable. Thus a small viscosity of the composition is desirable. A small viscosity at a low temperature is more desirable. The elastic constant relates to the response time of the device. A large elastic constant in the device is more desirable for attaining a short response time in the deice.

[Table 1]

Table 1. Characteristics in liquid crystal compositions and liquid crystal dimming devices

| No. | Characteristics of liquid crystal compositions | Characteristics of liquid crystal dimming devices |
|---|---|---|
| 1 | a wide temperature range of a nematic phase | a wide temperature range in which the device can be used |
| 2 | a small viscosity | a short response time |
| 3 | a large optical anisotropy | a large haze |
| 4 | a large positive or negative dielectric anisotropy | a low threshold voltage and low power consumption |
| 5 | a large specific resistance | a large voltage holding ratio |
| 6 | a high stability to ultraviolet light or heat | a long service life |
| 7 | a large elastic constant | a short response time |

The optical anisotropy of the composition relates to the haze of the liquid crystal dimming device. The haze is the ratio of the diffused light to the total transmitted light. A large haze is desirable when light is shut off. A large optical anisotropy is desirable for a large haze. A large dielectric anisotropy of the composition contributes to a low threshold voltage or low power consumption of the device. A large dielectric anisotropy is thus desirable. A large specific resistance of the composition contributes to a large voltage holding ratio of the device. It is thus desirable that a composition should have a large specific resistance in the initial stages. It is desirable that a composition should have a large specific resistance, after it has been used for a long time. The stability or the weatherproof of the composition to light or heat relates to the service life of the device. When the stability or the weatherproof is high, the service life is long. Characteristics of this kind are desirable for the device.

One example of the liquid crystal dimming device is a device with a polymer dispersed type, where the drops of the liquid crystal composition are sealed and fixed in a polymer (see Patent document No. 3). Another example is a sandwich-type device where the liquid crystal composition is interposed and fixed between two substrates. In the device of the latter type, the device sometimes has a mode such as a TN mode, a VA mode, an IPS mode and an FFS mode. A composition having positive dielectric anisotropy is used for a liquid crystal dimming device having a TN mode. A composition having negative dielectric anisotropy is used for a liquid crystal dimming device having a VA mode. A composition having positive or negative dielectric anisotropy is used for a liquid crystal dimming device having an IPS mode or an FFS mode.

[Prior art]

[Patent document]

Patent document No. 1: JP H03-047392 A (1991).
Patent document No. 2: JP H08-184273 A (1996).
Patent document No. 3: JP H07-175045 A (1995).

[Summary of the invention]

[Subject to be solved by the invention]

One of the objects of the invention is to provide a liquid crystal composition that is suitable for dimming and satisfies at least one of characteristics such as a high maximum temperature of a nematic phase, a low minimum temperature of a nematic phase, a small viscosity, a large optical anisotropy, a large positive dielectric anisotropy, a large specific resistance, a high stability to light, a high stability to heat and a large elastic constant. Another object is to provide a liquid crystal composition that is suitable for dimming and is suitably balanced between at least two of these characteristics . Another object is to provide a liquid crystal dimming device including such a composition. Another object is to provide a liquid crystal dimming device having characteristics such as a short response time, a large voltage holding ratio, a low threshold voltage, a large haze and a long service life. Further, another object is to provide dimming windows, smart windows and so forth, into which the liquid crystal dimming device is assembled.

[Means for solving the subject]

The invention relates to a liquid crystal composition for dimming, having a nematic phase and positive dielectric anisotropy and including at least one compound selected from the group of compounds represented by formula (1) as a first component, and a liquid crystal dimming device including this composition.

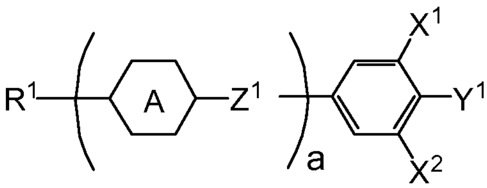
(1)

In formula (1), $R^1$ is alkyl having 1 to 12 carbons, alkoxy having 1 to 12 carbons or alkenyl having 2 to 12 carbons; ring A is 1,4-cyclohexylene, 1,4-phenylene, 2-fluoro-1,4-phenylene, 2,3-difluoro-1,4-phenylene, 2,6-difluoro-1,4-phenylene, pyrimidine-2,5-diyl, 1,3-dioxane-2,5-diyl or tetrahydropyran-2, 5-diyl; $Z^1$ is a single bond, ethylene, carbonyloxy or difluoromethyleneoxy; $X^1$ and $X^2$ are independently hydrogen or fluorine; $Y^1$ is fluorine, chlorine, alkyl having 1 to 12 carbons in which at least one hydrogen has been replaced by fluorine or chlorine, alkoxy having 1 to 12 carbons in which at least one hydrogen has been replaced by fluorine or chlorine or alkenyloxy having 2 to 12 carbons in which at least one hydrogen has been replaced by fluorine or chlorine; and a is 1, 2, 3 or 4.

[Effect of the invention]

One of the advantages of the invention is to provide a liquid crystal composition that is suitable for dimming

and satisfies at least one of characteristics such as a high maximum temperature of a nematic phase, a low minimum temperature of a nematic phase, a small viscosity, a large optical anisotropy, a large positive dielectric anisotropy, a large specific resistance, a high stability to light, a high stability to heat and a large elastic constant. Another advantage is to provide a liquid crystal composition that is suitable for dimming and is suitably balanced between at least two of these characteristics. Another advantage is to provide a liquid crystal dimming device including such a composition. Another advantage is to provide a liquid crystal dimming device having characteristics such as a short response time, a large voltage holding ratio, a low threshold voltage, a large haze and a long service life. Further, another advantage is to provide dimming windows, smart windows and so forth, into which the liquid crystal dimming device is assembled.

[Embodiment to carry out the invention]

The usage of the terms in the specification and claims is as follows. "Liquid crystal composition" and "liquid crystal dimming device" are sometimes abbreviated to "composition" and "device", respectively. "Liquid crystal dimming device" is a generic term for a liquid crystal display panel and a liquid crystal display module having a dimming function. "Liquid crystal compound" is a generic term for a compound having a liquid crystal phase such as a nematic phase or a smectic phase, and for a compound having no liquid crystal phases but being mixed with a composition for the purpose of adjusting the characteristics, such as the temperature range of a nematic phase, the viscosity and the dielectric anisotropy. This compound has, for example, a six-membered ring such as 1,4-cyclohexylene or 1,4-phenylene, and its molecular structure is rod-like. "Polymerizable compound" is a compound that is added to a composition in order to form a polymer in it. A liquid crystal compound having alkenyl is not polymerizable in that sense.

A liquid crystal composition is prepared by mixing a plurality of liquid crystal compounds. An additive such as an optically active compound, an antioxidant, an ultraviolet light absorber, a coloring matter, an antifoaming agent, a polymerizable compound, a polymerization initiator, a polymerization inhibitor and a polar compound is added to this composition as required. Even if an additive is added, the ratio of a liquid crystal compound is expressed as a percentage by mass (% by mass) based on the mass of the liquid crystal composition excluding the additive. The ratio of the additive is expressed as a percentage by mass (% by mass) based on the mass of the liquid crystal composition excluding the additive. That is to say, the ratio of the additive or liquid crystal compound is calculated on the basis of the total mass of the liquid crystal compounds. Mass parts per million (ppm) is sometimes used. The ratio of the polymerization initiator and the polymerization inhibitor is exceptionally expressed on the basis of the mass of the polymerizable compound.

"The maximum temperature of a nematic phase" is sometimes abbreviated to "the maximum temperature". "The minimum temperature of a nematic phase" is sometimes abbreviated to "the minimum temperature". That "specific resistance is large" means that a composition has a large specific resistance in the initial stages, and that the composition has a large specific resistance, after it has been used for a long time. That "a voltage holding ratio is large" means that a device has a large voltage holding ratio at a temperature close to the maximum temperature as well as at room temperature in the initial stages, and that the device has a large voltage holding ratio at a temperature close to the maximum temperature as well as at room temperature, after it has been used for a long time. The characteristics of a composition or a device are sometimes studied using an aging test. The expression "increase the dielectric anisotropy" means that its value increases positively when the composition has positive dielectric anisotropy, and that its value increases negatively when the composition has negative dielectric anisotropy.

A compound represented by formula (1) is sometimes abbreviated to "compound (1)". At least one compound selected from the group of compounds represented by formula (1) is sometimes abbreviated to "compound (1)". "Compound (1)" means one compound, a mixture of two compounds or a mixture of three or more compounds represented by formula (1). This applies to a compound represented by another formula. The expression "at least one 'A' " means that the number of 'A' is arbitrary. The expression "at least one 'A' may be replaced by 'B' " means that the position of 'A' is arbitrary when the number of 'A' is one, and the positions can also be selected without restriction when the number of 'A' is two or more. This rule also applies to the expression "at least one 'A' has been replaced by 'B' ".

An expression such as "at least one $-CH_2-$ may be replaced by -O-" is used in this specification. In this case, $-CH_2-CH_2-CH_2-$ may be transformed to $-O-CH_2-O-$ by replacement of nonadjacent $-CH_2-$ with -O-. However, adjacent $-CH_2-$ should not be replaced by -O-. This is because $-O-O-cH_2-$ (peroxide) is formed by the replacement. That is to say, the expression means both "one $-CH_2-$ may be replaced by -O-" and "at least two nonadjacent $-CH_2-$ may be replaced by -O-". The same rule applies to the replacement with a divalent group such as -CH=CH- or -COO-, as well as the replacement with -O-.

The symbol for the terminal group, $R^1$, is used for a plurality of compounds in the chemical formulas of component compounds. In these compounds, two groups represented by two arbitrary $R^1$ may be the same or different. In one case, for example, $R^1$ of compound (1-1) is ethyl and $R^1$ of compound (1-2) is ethyl. In another case, $R^1$ of compound (1-1) is ethyl and $R^1$ of compound (1-2) is propyl. The same rule applies to symbols of other terminal groups and so forth. In formula (1), two rings A are present when subscript 'a' is 2. In this compound, two groups represented by two rings A may be the same or different. The same rule applies to two arbitrary rings A, when subscript 'a' is greater than 2. The

same rule applies to other symbols.

A symbol such as A, B, C or D surrounded by a hexagon corresponds to a ring such as ring A, ring B, ring C or ring D, respectively, and represents a ring such as a six-membered ring or a condensed ring. In the expression "ring A and ring B are independently X, Y or Z", "independently" is used since the subject is plural. When the subject is "ring A", "independently" is not used, since the subject is singular. When "ring A" is used in a plurality of formulas, the rule "may be the same or different" is applied to "ring A". The same applies to other groups.

2-Fluoro-1,4-phenylene means the two divalent groups described below. Fluorine may be facing left (L) or facing right (R) in a chemical formula. The same rule applies to a left-right asymmetric divalent group formed from a ring by removing two hydrogens, such as tetrahydropyran-2,5-diyl. The same rule also applies to a bonding group such as carbonyloxy (-COO- or -OCO-).

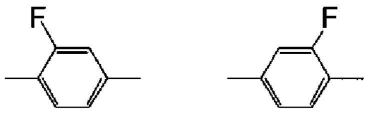

(L) (R)

Alkyl in a liquid crystal compound is straight-chain or branched-chain, and does not include cycloalkyl. Straight-chain alkyl is preferable to branched-chain alkyl. These apply to a terminal group such as alkoxy and alkenyl. With regard to the configuration of 1,4-cyclohexylene, trans is preferable to cis for increasing the maximum temperature.

The invention includes the following items.

Item 1. A liquid crystal composition for dimming, having a nematic phase and positive dielectric anisotropy and including at least one compound selected from the group of compounds represented by formula (1) as a first component.

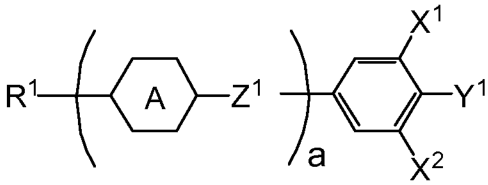

(1)

In formula (1), $R^1$ is alkyl having 1 to 12 carbons, alkoxy having 1 to 12 carbons or alkenyl having 2 to 12 carbons; ring A is 1,4-cyclohexylene, 1,4-phenylene, 2-fluoro-1,4-phenylene, 2,3-difluoro-1,4-phenylene, 2,6-difluoro-1,4-phenylene, pyrimidine-2,5-diyl, 1,3-dioxane-2,5-diyl or tetrahydropyran-2,5-diyl; $Z^1$ is a single bond, ethylene, carbonyloxy or difluoromethyleneoxy; $X^1$ and $X^2$ are independently hydrogen or fluorine; $Y^1$ is fluorine, chlorine, alkyl having 1 to 12 carbons in which at least one hydrogen has been replaced by fluorine or chlorine, alkoxy having 1 to 12 carbons in which at least one hydrogen has been replaced by fluorine or chlorine or alkenyloxy having 2 to 12 carbons in which at least one hydrogen has been replaced by fluorine or chlorine; and a is 1, 2, 3 or 4.

Item 2. The liquid crystal composition for dimming according to item 1, including at least one compound selected from the group of compounds represented by formula (1-1) to formula (1-35) as the first component.

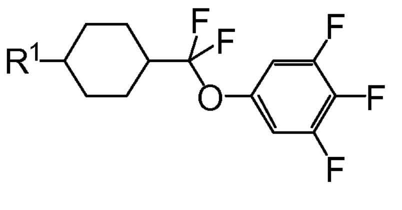

(1-1)

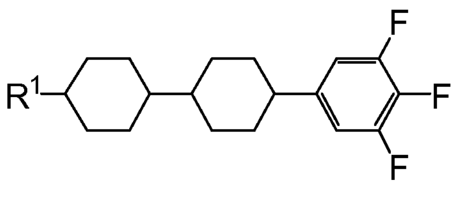

(1-2)

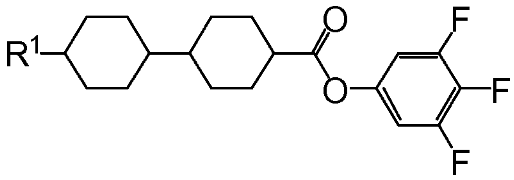

(1-3)

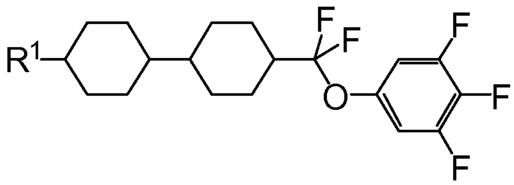

(1-4)

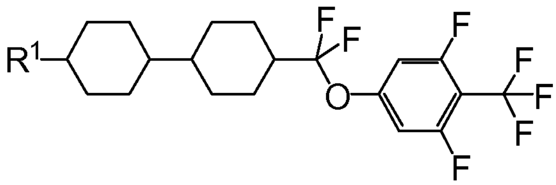

(1-5)

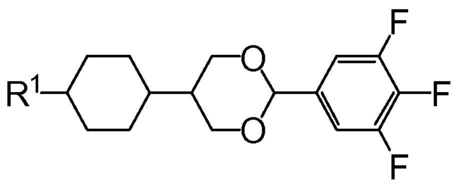

(1-6)

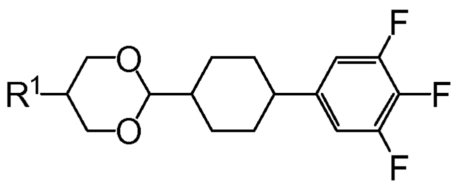

(1-7)

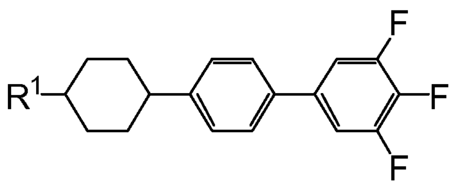

(1-8)

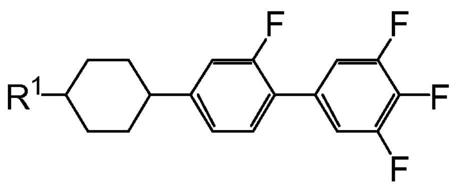

(1-9)

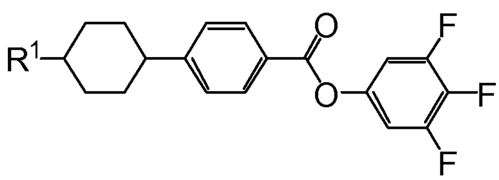

(1-10)

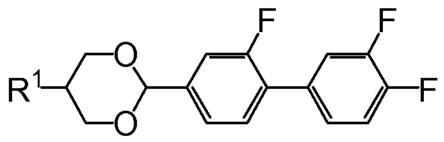

(1-11)

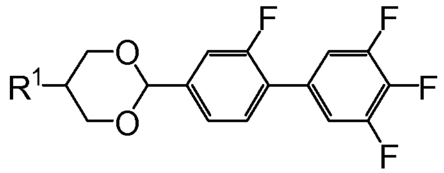

(1-12)

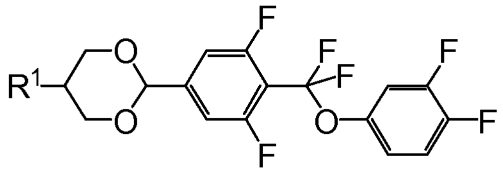

(1-13)

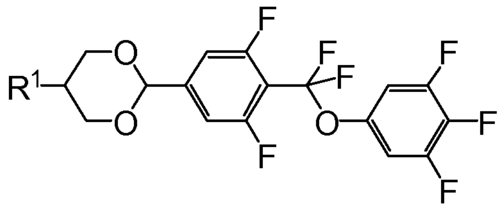

(1-14)

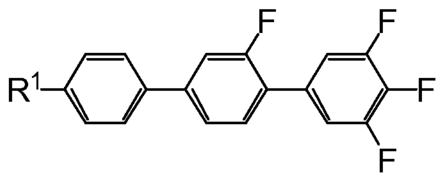

(1-15)

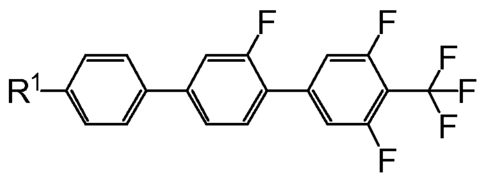

(1-16)

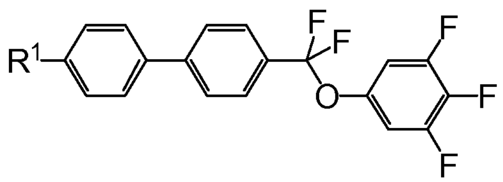

(1-17)

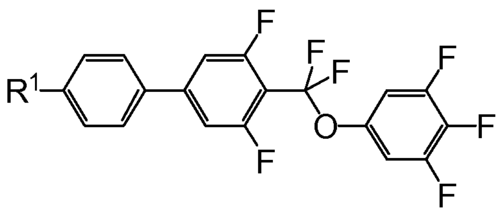

(1-18)

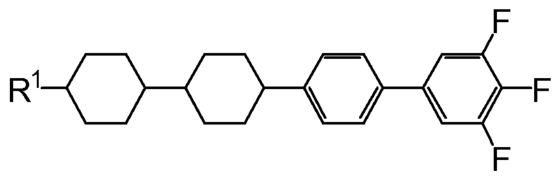

(1-19)

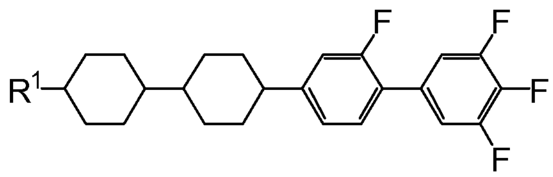

(1-20)

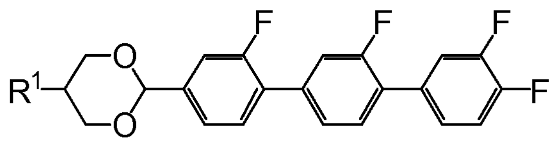

(1-21)

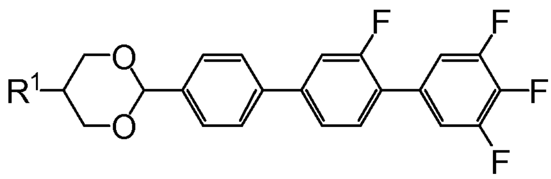

(1-22)

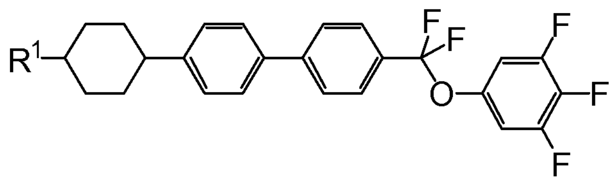

(1-23)

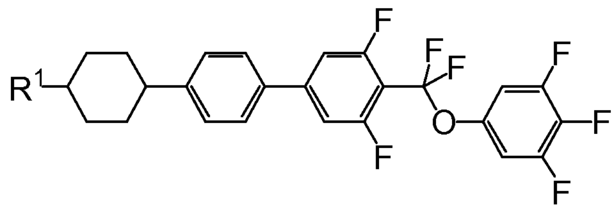

(1-24)

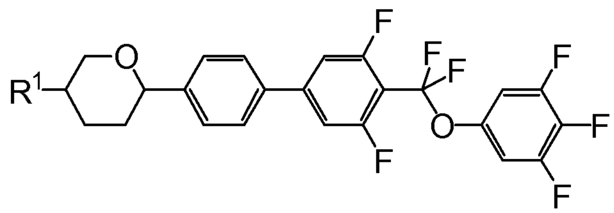

(1-25)

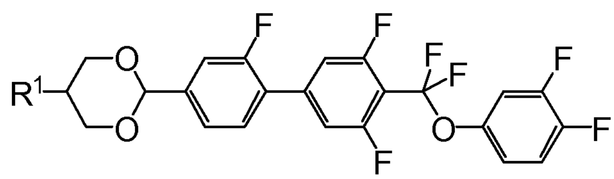

(1-26)

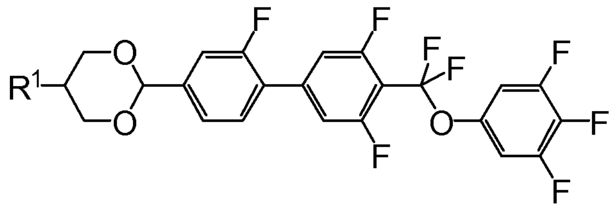
(1-27)

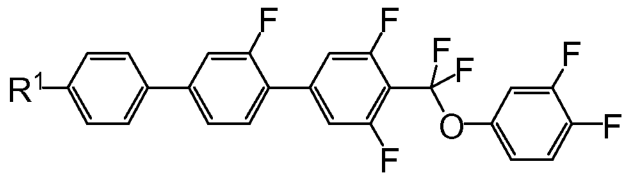
(1-28)

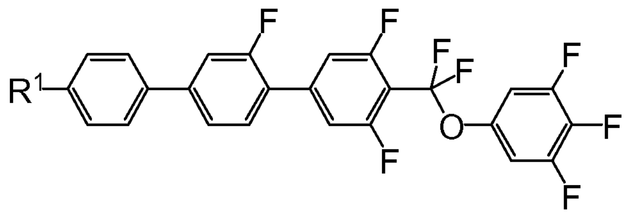
(1-29)

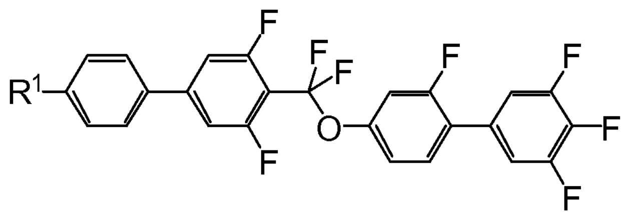
(1-30)

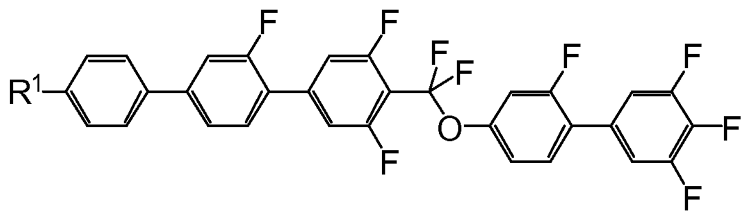
(1-31)

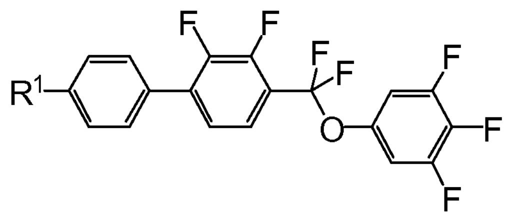
(1-32)

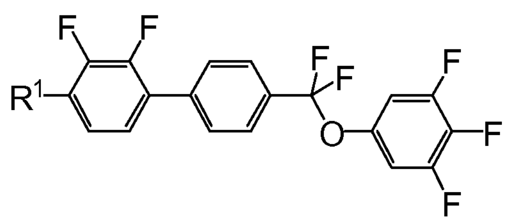
(1-33)

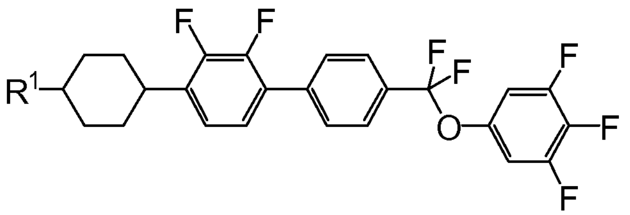

(1-34)

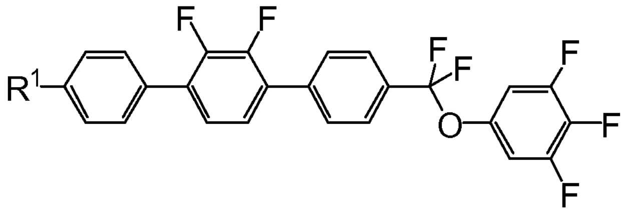

(1-35)

In formula (1-1) to formula (1-35), $R^1$ is alkyl having 1 to 12 carbons, alkoxy having 1 to 12 carbons or alkenyl having 2 to 12 carbons.

Item 3. The liquid crystal composition for dimming according to item 1 or 2, wherein the ratio of the first component is in the range of 5% by mass to 90% by mass.

Item 4. The liquid crystal composition for dimming according to any one of items 1 to 3, including at least one compound selected from the group of compounds represented by formula (2) as a second component.

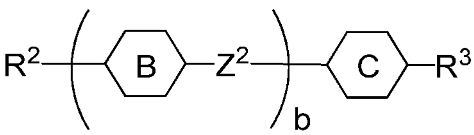

(2)

In formula (2), $R^2$ and $R^3$ are independently alkyl having 1 to 12 carbons, alkoxy having 1 to 12 carbons, alkenyl having 2 to 12 carbons or alkenyl having 2 to 12 carbons in which at least one hydrogen has been replaced by fluorine or chlorine; ring B and ring C are independently 1,4-cyclohexylene, 1,4-phenylene, 2-fluoro-1,4-phenylene or 2,5-difluoro-1,4-phenylene; $Z^2$ is a single bond, ethylene or carbonyloxy; and b is 1, 2 or 3.

Item 5. The liquid crystal composition for dimming according to any one of items 1 to 4, including at least one compound selected from the group of compounds represented by formula (2-1) to formula (2-13) as the second component.

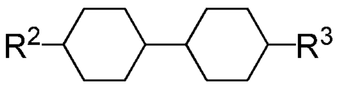

(2-1)

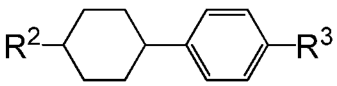

(2-2)

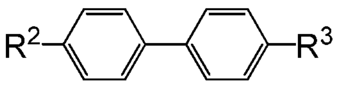

(2-3)

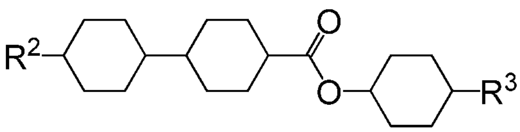

(2-4)

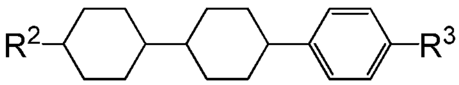

(2-5)

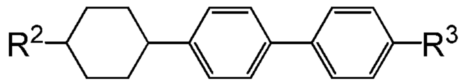

(2-6)

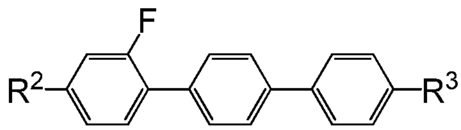

(2-7)

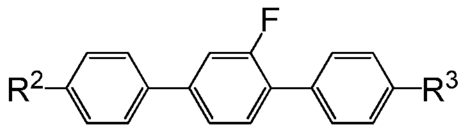

(2-8)

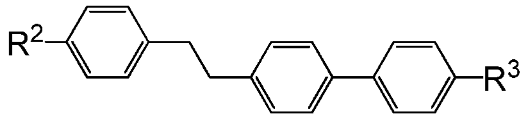

(2-9)

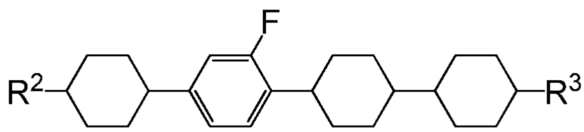

(2-10)

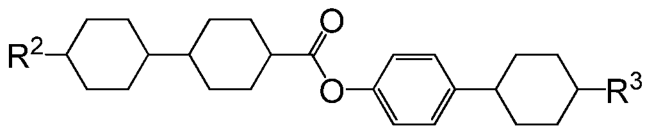

(2-11)

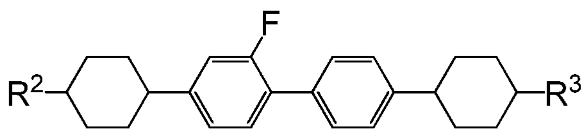

(2-12)

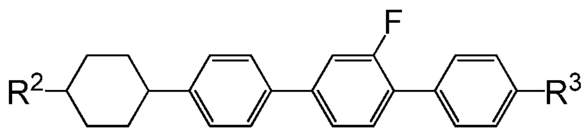

(2-13)

In formula (2-1) to formula (2-13), $R^2$ and $R^3$ are independently alkyl having 1 to 12 carbons, alkoxy having 1 to 12 carbons, alkenyl having 2 to 12 carbons or alkenyl having 2 to 12 carbons in which at least one hydrogen has been replaced by fluorine or chlorine.

Item 6. The liquid crystal composition for dimming according to item 4 or 5, wherein the ratio of the second component is in the range of 5% by mass to 90% by mass.

Item 7. The liquid crystal composition for dimming according to any one of items 1 to 6, including at least one compound selected from the group of compounds represented by formula (3) as a third component.

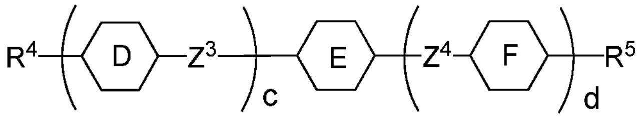

(3)

In formula (3), $R^4$ and $R^5$ are independently alkyl having 1 to 12 carbons, alkoxy having 1 to 12 carbons, alkenyl having 2 to 12 carbons or alkenyloxy having 2 to 12 carbons; ring D and ring F are independently 1,4-cyclohexylene, 1,4-cyclohexenylene, tetrahydropyran-2,5-diyl, 1,4-phenylene, 1,4-phenylene in which at least one hydrogen has been replaced by fluorine or chlorine, naphthalene-2,6-diyl, naphthalene-2,6-diyl in which at least one hydrogen has been replaced by fluorine or chlorine, chromane-2,6-diyl or chromane-2,6-diyl in which at least one hydrogen has been replaced by fluorine or chlorine; ring E is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochromane-2,6-diyl; $Z^3$ and $Z^4$ are independently a single bond, ethylene, carbonyloxy or methyleneoxy; c is 1, 2 or 3, and d is 0 or 1; and the sum of c and d is 3 or less.

Item 8. The liquid crystal composition for dimming according to any one of items 1 to 7, including at least one compound selected from the group of compounds represented by formula (3-1) to formula (3-22) as the third component.

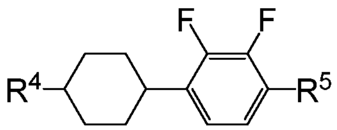
(3-1)

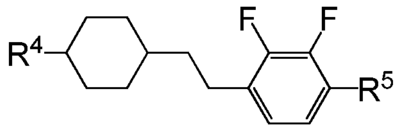
(3-2)

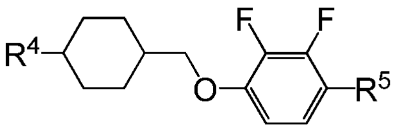
(3-3)

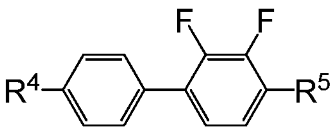
(3-4)

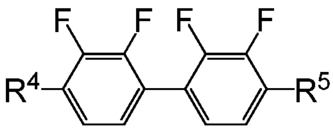
(3-5)

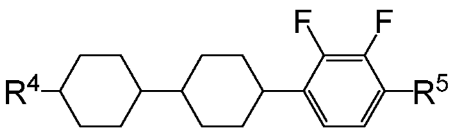
(3-6)

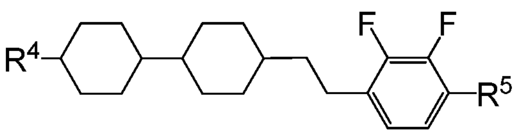
(3-7)

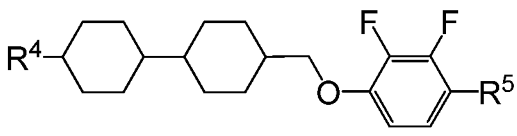
(3-8)

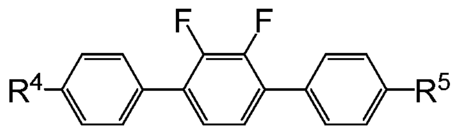
(3-9)

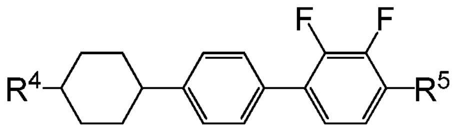
(3-10)

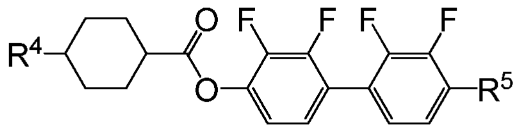
(3-11)

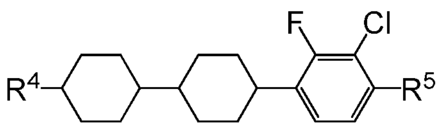
(3-12)

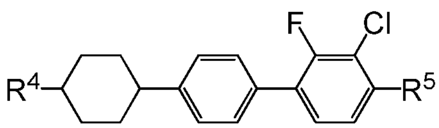
(3-13)

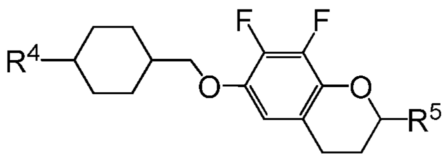
(3-14)

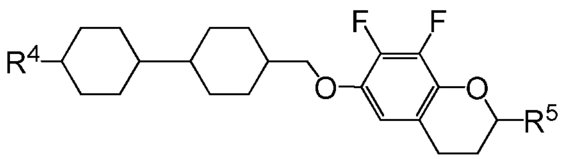
(3-15)

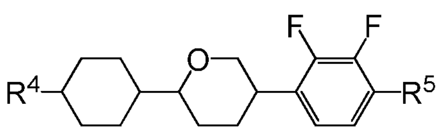
(3-16)

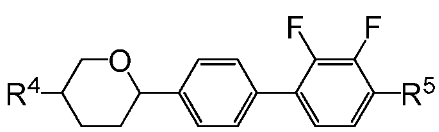
(3-17)

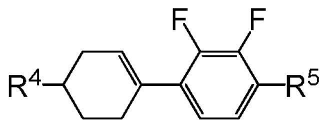

(3-18)

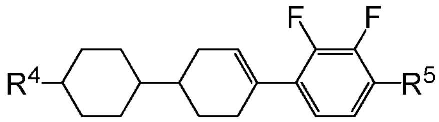

(3-19)

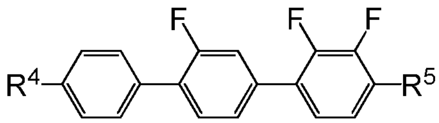

(3-20)

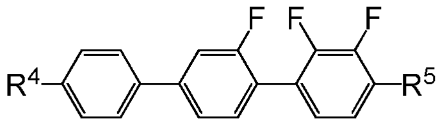

(3-21)

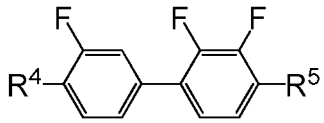

(3-22)

In formula (3-1) to formula (3-22), $R^4$ and $R^5$ are independently alkyl having 1 to 12 carbons, alkoxy having 1 to 12 carbons, alkenyl having 2 to 12 carbons or alkenyloxy having 2 to 12 carbons.

Item 9. The liquid crystal composition for dimming according to item 7 or 8, wherein the ratio of the third component is in the range of 3% by mass to 25% by mass.

Item 10. The liquid crystal composition for dimming according to any one of items 1 to 9, wherein the maximum temperature of a nematic phase (NI) is 90 °C or higher.

Item 11. A liquid crystal dimming device having a liquid crystal layer, wherein the liquid crystal layer is a liquid crystal composition for dimming according to any one of items 1 to 10.

Item 12. The liquid crystal dimming device according to item 11, wherein the liquid crystal layer is sandwiched between a pair of transparent substrates facing each other, the transparent substrate is a glass plate or an acrylic plate, the transparent substrate has a transparent electrode, and the transparent substrate may have an alignment layer.

Item 13. The liquid crystal dimming device according to item 11, wherein the liquid crystal layer is sandwiched between a pair of transparent substrates facing each other, the transparent substrate has a transparent electrode, the transparent substrate may have an alignment film and the backside of one of the transparent substrates has a reflecting plate.

Item 14. The liquid crystal dimming device according to item 11, having a dimming material sandwiched between linear polarizers, wherein the dimming material has a laminated structure of a first film for a liquid crystal alignment layer, a liquid crystal layer and a second film for a liquid crystal alignment layer, and the first and second films for a liquid crystal alignment layer include a transparent plastic film substrate, a transparent electrode and an alignment layer.

Item 15. A dimming window using the liquid crystal dimming device according to any one of items 11 to 14.

Item 16. A smart window using the liquid crystal dimming device according to any one of items 11 to 14.

Item 17. Use of the liquid crystal composition for dimming according to any one of items 1 to 10, for a liquid crystal dimming device.

Item 18. Use of the liquid crystal composition for dimming according to any one of items 1 to 10, for a liquid crystal dimming device where a transparent substrate is a plastic film.

Item 19. Use of the liquid crystal composition for dimming according to any one of items 1 to 10, for a dimming window.

Item 20. Use of a liquid crystal composition for dimming according to any one of items 1 to 10, for a smart window.

The invention includes also the following items. (a) A production method of a liquid crystal dimming device, including a step where a transparent electrode and an alignment layer are formed on at least one of a pair of transparent substrates, a step where the pair of transparent substrates is faced each other with the alignment layers inward, and a

step where the liquid crystal composition for dimming is filled between the pair of transparent substrates. In the production method, the transparent substrate may be a hard material such as glass or an acrylic plate or may be a soft material such as a plastic film. (b) A production method of a dimming window, including a step where a liquid crystal dimming device having the liquid crystal composition for dimming is sandwiched between a pair of transparent substrates. (c) A production method of a smart window, including a step where a liquid crystal dimming device having the liquid crystal composition for dimming is sandwiched between a pair of transparent substrates. A dimming window and a smart window having characteristics such as a short response time, a large voltage holding ratio, a low threshold voltage, a large haze and a long service life can be obtained by such a production method.

The composition used for a liquid crystal dimming device of the invention will be explained in the following order: First, the structure of the composition will be explained. Second, the main characteristics of the component compounds and the main effects of these compounds on the composition will be explained. Third, a combination of the components in the composition, a desirable ratio of the components and its basis will be explained. Fourth, a desirable embodiment of the component compounds will be explained. Fifth, desirable component compounds will be shown. Sixth, additives that may be added to the composition will be explained. Seventh, methods for synthesizing the component compounds will be explained. Last, the use of the composition will be explained.

First, the structure of the composition will be explained. The composition includes a plurality of liquid crystal compounds. The composition may include an additive. The additive includes an optically active compound, an antioxidant, an ultraviolet light absorber, a coloring matter, an antifoaming agent, a polymerizable compound, a polymerization initiator, a polymerization inhibitor and a polar compound. A small amount of additive is desirable in view of the stability to light or heat. A desirable ratio of the compound is 5% by mass or less. A more desirable ratio is 0% by masss. The compositions are classified into composition A and composition B in view of the liquid crystal compound. Composition A may further include any other liquid crystal compound in addition to liquid crystal compounds selected from compound (1), compound (2) and compound (3). "Any other liquid crystal compound" is a liquid crystal compound that is different from compound (1), compound (2) and compound (3). Such a compound is mixed with the composition for the purpose of further adjusting the characteristics. Of any other liquid crystal compound, a smaller amount of cyano compound is desirable in view of its stability to heat or light. A desirable ratio of this compound is 5% or less by mass, and a more desirable ratio is 0% by mass.

Composition B consists essentially of compounds selected from compound (1), compound (2) and compound (3). The term "essentially" means that the composition B may include an additive, but does not include any other liquid crystal compound. Composition B has a smaller number of components than composition A. Composition B is preferable to composition A in view of cost reduction. Composition A is preferable to composition B from the point of view that characteristics can be further adjusted by mixing with any other liquid crystal compound.

Second, the main characteristics of the component compounds and the main effects of these compounds on the composition or the device will be explained. Table 2 summarizes the main characteristics of the component compounds based on the effects of the invention. In Table 2, the symbol L stands for "large" or "high", the symbol M stands for "medium", and the symbol S stands for "small" or "low". The symbols L, M and S show a classification based on a qualitative comparison among the component compounds, and the symbol 0 (zero) means that the value is quite small.

[Table 2]

Table 2. Characteristics of Compounds

| Compounds | Compound (1) | Compound (2) | Compound (3) |
|---|---|---|---|
| Maximum Temperature | S - L | S - L | S - L |
| Viscosity | M - L | S - M | M - L |
| Optical Anisotropy | M - L | S - L | M - L |
| Dielectric Anisotropy | S - L | 0 | M - L1) |
| Specific Resistance | L | L | L |
| 1) The value of the dielectric anisotropy is negative, and the symbol expresses the magnitude of the absolute value. | | | |

The main effects of the component compounds on the characteristics of the composition are as follows. Compound (1) increases the dielectric anisotropy. Compound (2) increases the maximum temperature or decreases the minimum temperature. Compound (3) increases the dielectric constant in the minor axis direction of liquid crystal molecules.

Third, a combination of the components in the composition, a desirable ratio of the components and its basis will be explained. A desirable combination of the components in the composition is the first component plus the second component, the first component plus the third component or the first component plus the second component plus the third component. A more desirable combination is the first component plus the second component or the first component plus the second component plus the third component.

A desirable ratio of the first component is approximately 5% by mass or more for increasing the dielectric anisotropy, and approximately 90% by mass or less for decreasing the minimum temperature. A more desirable ratio is in the range of approximately 10% by mass to approximately 85% by mass. An especially desirable ratio is in the range of approximately 20% by mass to approximately 80% by mass.

A desirable ratio of the second component is approximately 5% by mass or more for increasing the maximum temperature or for decreasing the minimum temperature, and approximately 90% by mass or less for increasing the dielectric anisotropy. A more desirable ratio is in the range of approximately 10% by mass to approximately 85% by mass. An especially desirable ratio is in the range of approximately 20% by mass to approximately 80% by mass.

A desirable ratio of the third component is approximately 3% by mass or more for increasing the dielectric constant in the minor axis direction of liquid crystal molecules, and approximately 25% by mass or less for decreasing the minimum temperature. A more desirable ratio is in the range of approximately 5% by mass to approximately 20% by mass. An especially desirable ratio is in the range of approximately 5% by mass to approximately 15% by mass.

Fourth, a desirable embodiment of the component compounds will be explained. In formula (1), formula (2) and formula (3), $R^1$ is alkyl having 1 to 12 carbons, alkoxy having 1 to 12 carbons or alkenyl having 2 to 12 carbons. Desirable $R^1$ is alkyl having 1 to 12 carbons for increasing the stability to light or heat. $R^2$ and $R^3$ are independently alkyl having 1 to 12 carbons, alkoxy having 1 to 12 carbons, alkenyl having 2 to 12 carbons or alkenyl having 2 to 12 carbons in which at least one hydrogen has been replaced by fluorine or chlorine. Desirable $R^2$ or $R^3$ is alkenyl having 2 to 12 carbons for increasing the maximum temperature or for decreasing the minimum temperature, and alkyl having 1 to 12 carbons for increasing the stability to light or heat. $R^4$ and $R^5$ are independently alkyl having 1 to 12 carbons, alkoxy having 1 to 12 carbons, alkenyl having 2 to 12 carbons or alkenyloxy having 2 to 12 carbons. Desirable $R^4$ or $R^5$ is alkyl having 1 to 12 carbons for increasing the stability to light or heat, and alkoxy having 1 to 12 carbons for increasing the dielectric constant in the minor axis direction of liquid crystal molecules.

Desirable alkyl is methyl, ethyl, propyl, butyl, pentyl, hexyl, heptyl or octyl. More desirable alkyl is methyl, ethyl, propyl, butyl or pentyl for decreasing the minimum temperature.

Desirable alkoxy is methoxy, ethoxy, propoxy, butoxy, pentyloxy, hexyloxy or heptyloxy. More desirable alkoxy is methoxy or ethoxy for decreasing the minimum temperature.

Desirable alkenyl is vinyl, 1-propenyl, 2-propenyl, 1-butenyl, 2-butenyl, 3-butenyl, 1-pentenyl, 2-pentenyl, 3-pentenyl, 4-pentenyl, 1-hexenyl, 2-hexenyl, 3-hexenyl, 4-hexenyl or 5-hexenyl. More desirable alkenyl is vinyl, 1-propenyl, 3-butenyl or 3-pentenyl for decreasing the minimum temperature. A desirable configuration of -CH=CH- in the alkenyl depends on the position of the double bond. Trans is preferable in the alkenyl such as 1-propenyl, 1-butenyl, 1-pentenyl, 1-hexenyl, 3-pentenyl and 3-hexenyl for decreasing the minimum temperature, for instance. Cis is preferable in the alkenyl such as 2-butenyl, 2-pentenyl and 2-hexenyl.

Desirable alkenyloxy is vinyloxy, allyloxy, 3-butenyloxy, 3-pentenyloxy or 4-pentenyloxy. More desirable alkenyloxy is allyloxy or 3-butenyloxy for decreasing the minimum temperature.

Desirable examples of alkyl in which at least one hydrogen has been replaced by fluorine or chlorine are fluoromethyl, 2-fluoroethyl, 3-fluoropropyl, 4-fluorobutyl, 5-fluoropentyl, 6-fluorohexyl, 7-fluoroheptyl or 8-fluorooctyl. More desirable examples are 2-fluoroethyl, 3-fluoropropyl, 4-fluorobutyl or 5-fluoropentyl for increasing the dielectric anisotropy.

Desirable examples of alkenyl in which at least one hydrogen has been replaced by fluorine or chlorine are 2,2-difluorovinyl, 3,3-difluoro-2-propenyl, 4,4-difluoro-3-butenyl, 5,5-difluoro-4-pentenyl or 6,6-difluoro-5-hexenyl. More desirable examples are 2,2-difluorovinyl or 4,4-difluoro-3-butenyl for decreasing the minimum temperature.

Ring A is 1,4-cyclohexylene, 1,4-phenylene, 2-fluoro-1,4-phenylene, 2,3-difluoro-1,4-phenylene, 2,6-difluoro-1,4-phenylene, pyrimidine-2,5-diyl, 1,3-dioxane-2,5-diyl or tetrahydropyran-2,5-diyl. Desirable ring A is 1,4-phenylene or 2-fluoro-1,4-phenylene for increasing the optical anisotropy. With regard to the configuration of 1,4-cyclohexylene, trans is preferable to cis for increasing the maximum temperature. Tetrahydropyran-2,5-diyl is

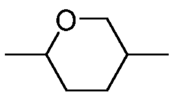

or

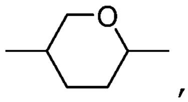

preferably

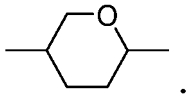

Ring B and ring C are independently 1,4-cyclohexylene, 1,4-phenylene, 2-fluoro-1,4-phenylene or 2,5-difluoro-1,4-phenylene. Desirable ring B or ring C is 1,4-cyclohexylene for increasing the maximum temperature or for decreasing the minimum temperature, and 1,4-phenylene for decreasing the minimum temperature.

Ring D and ring F are independently 1,4-cyclohexylene, 1,4-cyclohexenylene, tetrahydropyran-2,5-diyl, 1,4-phenylene, 1,4-phenylene in which at least one hydrogen has been replaced by fluorine or chlorine, naphthalene-2,6-diyl, naphthalene-2,6-diyl in which at least one hydrogen has been replaced by fluorine or chlorine, chromane-2,6-diyl or chromane-2,6-diyl in which at least one hydrogen has been replaced by fluorine or chlorine. Desirable ring D or ring F is 1,4-cyclohexylene for decreasing the minimum temperature or for increasing the maximum temperature, and 1,4-phenylene for decreasing the minimum temperature.

Ring E is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochromane-2,6-diyl. Desirable ring E is 2,3-difluoro-1,4-phenylene for decreasing the minimum temperature and 2-chloro-3-fluoro-1,4-phenylene for deceasing the optical anisotropy and 7,8-difluorochromane-2,6-diyl for increasing the dielectric constant in the minor axis direction of liquid crystal molecules.

$Z^1$ is a single bond, ethylene, carbonyloxy or difluoromethyleneoxy. Desirable $Z^1$ is a single bond for increasing the maximum temperature, and difluoromethyleneoxy for increasing the dielectric anisotropy. $Z^2$ is a single bond, ethylene or carbonyloxy. Desirable $Z^2$ is a single bond for increasing the stability to light or heat. $Z^3$ and $Z^4$ are independently a single bond, ethylene, carbonyloxy or methyleneoxy. Desirable $Z^3$ or $Z^4$ is a single bond for decreasing the minimum temperature and ethylene for decreasing the minimum temperature and methyleneoxy for increasing the dielectric constant in the minor axis direction of liquid crystal molecules.

a is 1, 2, 3 or 4. Desirable a is 2 for decreasing the minimum temperature, and is 3 for increasing the dielectric anisotropy. b is 1, 2 or 3. Desirable b is 1 for decreasing the minimum temperature, and is 2 or 3 for increasing the maximum temperature. c is 1, 2 or 3; d is 0 or 1; and the sum of c and d is 3 or less. Desirable c is 1 for decreasing the minimum temperature, and is 2 or 3 for increasing the maximum temperature. Desirable d is 0 for decreasing the minimum temperature, and is 1 for decreasing the minimum temperature.

Fifth, desirable component compounds will be shown. Desirable compound (1) is compound (1-1) to compound (1-35) according to item 2. It is desirable that in these compounds, at least one of the first component should be compound (1-4), compound (1-12), compound (1-14), compound (1-15), compound (1-17), compound (1-18), compound (1-23), compound (1-27), compound (1-29) or compound (1-30). It is desirable that at least two of the first component should be a combination of compound (1-12) and compound (1-15), compound (1-14) and compound (1-27), compound (1-18) and compound (1-24), compound (1-18) and compound (1-29), compound (1-24) and compound (1-29) or compound (1-29) and compound (1-30).

Desirable compound (2) is compound (2-1) to compound (2-13) according to item 5. It is desirable that in these compounds, at least one of the second component should be compound (2-1), compound (2-3), compound (2-5), compound (2-6), compound (2-8) or compound (2-9). It is desirable that at least two of the second component should be a combination of compound (2-1) and compound (2-5), compound (2-1) and compound (2-6), compound (2-1) and compound (2-8), compound (2-1) and compound (2-9), compound (2-3) and compound (2-5), compound (2-3) and compound (2-6), compound (2-3) and compound (2-8) or compound (2-3) and compound (2-9).

Desirable compound (3) is compound (3-1) to compound (3-22) according to item 8. It is desirable that in these compounds, at least one of the third component should be compound (3-1), compound (3-2), compound (3-3), compound (3-4), compound (3-6), compound (3-7), compound (3-8) or compound (3-10) . It is desirable that at least two of the third component should be a combination of compound (3-1) and compound (3-6), compound (3-1) and compound (3-10), compound (3-3) and compound (3-6), compound (3-3) and compound (3-10), compound (3-4) and compound (3-6) or compound (3-4) and compound (3-10).

Sixth, additives that may be added to the composition will be explained. Such additives include an optically active compound, an antioxidant, an ultraviolet light absorber, a coloring matter, an antifoaming agent, a polymerizable compound, a polymerization initiator, a polymerization inhibitor and a polar compound. The optically active compound

is added to the composition for the purpose of inducing the helical structure of liquid crystal molecules and giving a twist angle. Examples of such compounds include compound (4-1) to compound (4-5). A desirable ratio of the optically active compound is approximately 5% by mass or less, and a more desirable ratio is in the range of approximately 0.01% by mass to approximately 2% by mass.

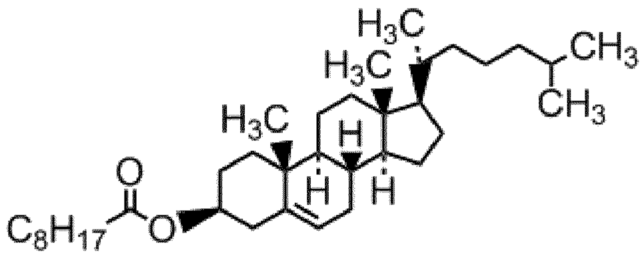
(4-1)

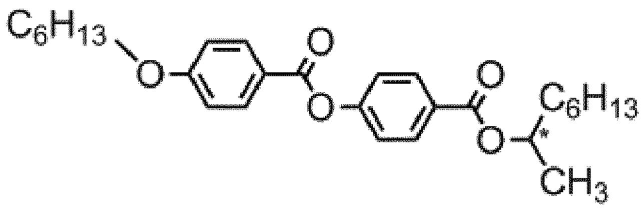
(4-2)

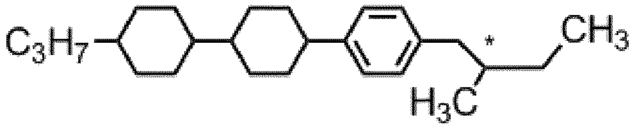
(4-3)

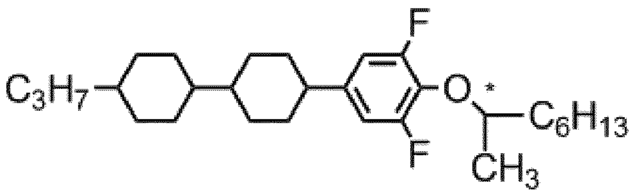
(4-4)

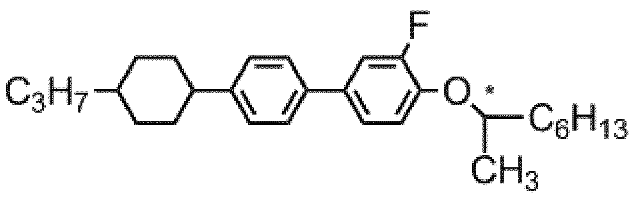
(4-5)

The antioxidant is added to the composition in order to prevent a decrease in specific resistance that is caused by heating under air, or to maintain a large voltage holding ratio at a temperature close to the maximum temperature as well as at room temperature, after the device has been used for a long time. A desirable example of the antioxidant is compound (5) where n is an integer from 1 to 9, for instance.

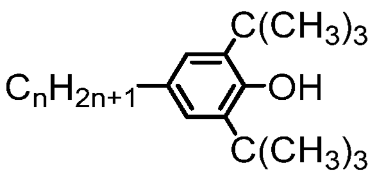
(5)

In compound (5), desirable n is 1, 3, 5, 7 or 9. More desirable n is 7. Compound (5) where n is 7 is effective in

maintaining a large voltage holding ratio at a temperature close to the maximum temperature as well as at room temperature, after the device has been used for a long time, since it has a small volatility. A desirable ratio of the antioxidant is approximately 50 ppm or more for achieving its effect and is approximately 600 ppm or less for avoiding a decrease in the maximum temperature or avoiding an increase in the minimum temperature. A more desirable ratio is in the range of approximately 100 ppm to approximately 300 ppm.

Desirable examples of the ultraviolet light absorber include benzophenone derivatives, benzoate derivatives and triazole derivatives. A light stabilizer such as an amine having steric hindrance is also desirable. A desirable ratio of the absorber or the stabilizer is approximately 50 ppm or more for achieving its effect and is approximately 10,000 ppm or less for avoiding a decrease in the maximum temperature or avoiding an increase in the minimum temperature. A more desirable ratio is in the range of approximately 100 ppm to approximately 10,000 ppm.

A dichroic dye such as an azo dye or an anthraquinone dye is added to the composition for adjusting to a device having a guest host (GH) mode. A desirable ratio of the coloring matter is in the range of approximately 0.01% by mass to approximately 10% by mass. The antifoaming agent such as dimethyl silicone oil or methyl phenyl silicone oil is added to the composition for preventing foam formation. A desirable ratio of the antifoaming agent is approximately 1 ppm or more for achieving its effect and is approximately 1,000 ppm or less for preventing the malfunction of liquid crystal molecules. A more desirable ratio is in the range of approximately 1 ppm to approximately 500 ppm.

The polymerizable compound is polymerized on irradiation with ultraviolet light. It may be polymerized in the presence of an initiator such as a photopolymerization initiator. Suitable conditions for polymerization, and a suitable type and amount of the initiator are known to a person skilled in the art, and have been described in the literature. For example, Irgacure 651 (registered trademark; BASF), Irgacure 184 (registered trademark; BASF) or Darocur 1173 (registered trademark; BASF), each of which is a photoinitiator, is suitable for radical polymerization. A desirable ratio of the photopolymerization initiator is in the range of approximately 0.1% by mass to approximately 5% by mass based on the mass of the polymerizable compound. A more desirable ratio is in the range of approximately 1% by mass to approximately 3% by mass.

The polymerization inhibitor may be added in order to prevent the polymerization when the polymerizable compound is kept in storage. The polymerizable compound is usually added to the composition without removing the polymerization inhibitor. Examples of the polymerization inhibitor include hydroquinone derivatives such as hydroquinone and methylhydroquinone, 4-t-butylcatechol, 4-methoxyphenol and phenothiazine.

A polar compound is an organic compound having polarity. Here it does not include a compound with ionic bonds . Atoms, such as oxygen, sulfur and nitrogen, are more electronegative and have a tendency to have partial negative charges. Carbon and hydrogen are neutral or have a tendency to have partial positive charges. Polarity results from the uneven partial charge distribution between different types of atoms in the compound. For example, the polar compound has at least one of partial structures such as -OH, -COOH, -SH, $-NH_2$, >NH and >N-.

Seventh, methods for synthesizing the component compounds will be explained. These compounds can be synthesized by known methods. The synthetic methods will be exemplified. Compound (1-2) and compound (1-8) are prepared by the method described in JP H02-233626 A (1990) . Compound (2-1) is prepared by the method described in JP S59-176221 A (1984). Compound (3-1) is prepared by the method described in JP H02-503441 A (1990). Antioxidants are commercially available. A compound of formula (5) where n is 1 is available from Sigma-Aldrich Corporation. Compound (5) where n is 7, for instance, is synthesized according to the method described in U. S. Patent No. 3,660,505.

Compounds whose synthetic methods are not described can be prepared according to the methods described in books such as "Organic Syntheses" (John Wiley & Sons, Inc.), "Organic Reactions" (John Wiley & Sons, Inc.), "Comprehensive Organic Synthesis" (Pergamon Press), and "Shin-Jikken Kagaku Kouza" (New experimental Chemistry Course, in English; Maruzen Co., Ltd., Japan). The composition is prepared according to known methods using the compounds thus obtained. For example, the component compounds are mixed and dissolved in each other by heating.

Last, the use of the composition will be explained. The composition is used for a liquid crystal dimming device and so forth. This device has a liquid crystal layer sandwiched between a pair of transparent substrates facing each other. One example of the transparent substrate is a material that is hardly deformed such as a glass plate, a quartz plate and an acrylic plate. Another example is a flexible transparent plastic film such as an acrylic film and a polycarbonate film. The transparent substrate has a transparent electrode on it. It may have an alignment layer on the transparent electrode. An example of the transparent electrode is tin-doped indium oxide (ITO) or conductive polymers. A thin film of polyimide or polyvinyl alcohol is suitable for the alignment layer. The liquid crystal layer is filled with a liquid crystal composition including at least one compound selected from the group of compounds represented by formula (1) as a first component and having positive dielectric anisotropy.

Another example is a liquid crystal dimming device having a liquid crystal composition for dimming sandwiched between linear polarizers. This device has a dimming material, and the dimming material has a laminated structure of a first film for a liquid crystal alignment layer, a liquid crystal layer and a second film for a liquid crystal alignment layer. The film for a liquid crystal alignment layer has a transparent plastic film substrate, a transparent electrode and an alignment layer. An example of the substrate is a transparent polycarbonate film. The liquid crystal layer is filled with a

liquid crystal composition including at least one compound selected from the group of compounds represented by formula (1) as a first component and having positive dielectric anisotropy.

Another example a liquid crystal dimming device where a liquid crystal layer is sandwiched between a pair of transparent substrates facing each other, the transparent substrate is a glass plate or an acrylic plate, the transparent substrate has a transparent electrode and an alignment layer. Another example a liquid crystal dimming device where a liquid crystal layer is sandwiched between a pair of transparent substrates facing each other, the transparent substrate has a transparent electrode, the transparent substrate may have an alignment layer, and the backside of one of the transparent substrates has a reflecting plate.

Such a device has a function as a dimming film or a dimming glass. When the device is a film-shaped, it is pasted to an existing window, or it is sandwiched between a pair of glass plates, giving a laminated glass. Such a device is used for a window installed on an outer wall or the partition between a conference room and a hallway. That is to say, it is used for an electronic blind, a dimming window, a smart window and so forth. Furthermore, it can be utilized for a liquid crystal shatter and a light guide plate by functioning as a light switch.

[Examples]

The invention will be explained in more detail by way of examples. The invention is not limited to the examples. The invention includes a mixture of the composition in Example 1 and the composition in Example 2. The invention also includes a mixture prepared by mixing at least two compositions in Examples. Compounds prepared herein were identified by methods such as NMR analysis. The characteristics of the compounds, compositions and devices were measured by the methods described below.

NMR Analysis: A model DRX-500 apparatus made by Bruker BioSpin Corporation was used for measurement. In the measurement of $^1$H-NMR, a sample was dissolved in a deuterated solvent such as $CDCl_3$, and the measurement was carried out under the conditions of room temperature, 500 MHz and the accumulation of 16 scans. Tetramethylsilane was used as an internal standard. In the measurement of $^{19}$F-NMR, $CFCl_3$ was used as the internal standard, and 24 scans were accumulated. In the explanation of the nuclear magnetic resonance spectra, the symbols s, d, t, q, quin, sex, m and br stand for a singlet, a doublet, a triplet, a quartet, a quintet, a sextet, a multiplet and line-broadening, respectively.

Gas Chromatographic Analysis: A gas chromatograph Model GC-14B made by Shimadzu Corporation was used for measurement. The carrier gas was helium (2 milliliters per minute) . The sample injector and the detector (FID) were set to 280 °C and 300 °C, respectively. A capillary column DB-1 (length 30 meters, bore 0.32 millimeters, film thickness 0.25 micrometers, dimethylpolysiloxane as the stationary phase, non-polar) made by Agilent Technologies, Inc. was used for the separation of component compounds . After the column had been kept at 200 °C for 2 minutes, it was further heated to 280 °C at the rate of 5 °C per minute. A sample was dissolved in acetone (0.1% by mass), and 1 microliter of the solution was injected into the sample injector. A recorder used was Model C-R5A Chromatopac Integrator made by Shimadzu Corporation or its equivalent. The resulting gas chromatogram showed the retention time of peaks and the peak areas corresponding to the component compounds.

Solvents for diluting the sample may also be chloroform, hexane and so forth. The following capillary columns may also be used in order to separate the component compounds: HP-1 made by Agilent Technologies Inc. (length 30 meters, bore 0.32 millimeters, film thickness 0.25 micrometers), Rtx-1 made by Restek Corporation (length 30 meters, bore 0.32 millimeters, film thickness 0.25 micrometers), and BP-1 made by SGE International Pty. Ltd. (length 30 meters, bore 0.32 millimeters, film thickness 0.25 micrometers). A capillary column CBP1-M50-025 (length 50 meters, bore 0.25 millimeters, film thickness 0.25 micrometers) made by Shimadzu Corporation may also be used for the purpose of avoiding an overlap of peaks of the compounds.

The ratio of the liquid crystal compounds included in the composition may be calculated according to the following method. A mixture of the liquid crystal compounds was analyzed by gas chromatography (FID) . The ratio of peak areas in the gas chromatogram corresponds to the ratio of the liquid crystal compounds. When the capillary columns described above are used, the correction coefficient of respective liquid crystal compounds may be regarded as 1 (one) . Accordingly, the ratio (percentage by mass) of the liquid crystal compounds can be calculated from the ratio of peak areas.

Samples for measurement: A composition itself was used as a sample when the characteristics of the composition or the device were measured. When the characteristics of a compound were measured, a sample for measurement was prepared by mixing this compound (15% by mass) with mother liquid crystals (85% by mass). The characteristic values of the compound were calculated from the values obtained from measurements by an extrapolation method: (Extrapolated value) = (Measured value of sample) - 0.85 × (Measured value of mother liquid crystals) / 0.15. When a smectic phase (or crystals) deposited at 25 °C at this ratio, the ratio of the compound to the mother liquid crystals was changed in the order of (10% by mass: 90% by mass), (5% by mass: 95% by mass) and (1% by mass: 99% by mass). The values of the maximum temperature, the optical anisotropy, the viscosity and the dielectric anisotropy regarding the compound were obtained by means of this extrapolation method.

The mother liquid crystals described below were used. The ratio of the component compounds was expressed as a percentage by mass.

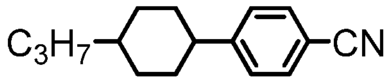
24%

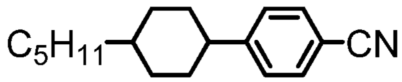
36%

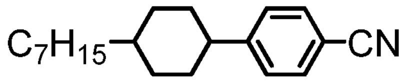
25%

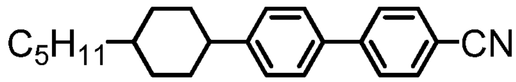
15%

Measurement methods: The characteristics of compounds were measured according to the following methods. Most are methods described in the JEITA standards (JEITA-ED-2521B) which was deliberated and established by Japan Electronics and Information Technology Industries Association (abbreviated to JEITA), or the modified methods. No thin film transistors (TFT) were attached to a TN device used for measurement.

(1) Maximum Temperature of a Nematic Phase (NI; °C): A sample was placed on a hot plate in a melting point apparatus equipped with a polarizing microscope and was heated at the rate of 1 °C per minute. The temperature was measured when a part of the sample began to change from a nematic phase to an isotropic liquid. The maximum temperature of a nematic phase is sometimes abbreviated to "the maximum temperature".

(2) Minimum Temperature of a Nematic Phase (Tc; °C) : A sample having a nematic phase was placed in glass vials and then kept in freezers at temperatures of 0 °C, -10 °C, -20 °C, -30 °C and -40 °C for 10 days, and then the liquid crystal phases were observed. For example, when the sample maintained the nematic phase at -20 °C, and was changed to crystals or a smectic phase at -30 °C, Tc was expressed as < -20 °C. The minimum temperature of a nematic phase is sometimes abbreviated to the "minimum temperature".

(3) Viscosity (bulk viscosity; $\eta$; measured at 20 °C; mPa•s) : An E-type viscometer made by Tokyo Keiki Inc. was used for measurement.

(4) Viscosity (rotational viscosity; $\gamma 1$; measured at 25 °C; mPa•s) : The measurement was carried out according to the method described in M. Imai, et al. , Molecular Crystals and Liquid Crystals, Vol. 259, 37 (1995). A sample was poured into a TN device in which the twist angle was 0 degrees and the distance between the two glass substrates (cell gap) was 5 micrometers. A voltage was applied to this device and increased stepwise with an increment of 0.5 volt in the range of 16 volts to 19.5 volts. After a period of 0.2 seconds with no voltage, a voltage was applied repeatedly under the conditions of a single rectangular wave alone (rectangular pulse; 0.2 seconds) and of no voltage (2 seconds) . The peak current and the peak time of the transient current generated by the applied voltage were measured. The value of rotational viscosity was obtained from these measured values and the calculating equation (8) on page 40 of the paper presented by M. Imai, et al. The value of dielectric anisotropy necessary for this calculation was obtained by using the device that was used for measuring the rotational viscosity, by the method described below.

(5) Optical anisotropy (refractive index anisotropy; $\Delta n$; measured at 25 °C) : The measurement was carried out using an Abbe refractometer with a polarizer attached to the ocular, using light at a wavelength of 589 nanometers. The surface of the main prism was rubbed in one direction, and then a sample was placed on the main prism. The refractive index ($n\|$) was measured when the direction of the polarized light was parallel to that of rubbing. The refractive index ($n\perp$) was measured when the direction of polarized light was perpendicular to that of rubbing. The value of the optical anisotropy ($\Delta n$) was calculated from the equation: $\Delta n = n\| - n\perp$.

(6) Dielectric anisotropy ($\Delta\varepsilon$; measured at 25 °C) : A sample was poured into a TN device in which the distance between the two glass substrates (cell gap) was 9 micrometers and the twist angle was 80 degrees. Sine waves (10 V, 1 kHz) were applied to this device, and the dielectric constant ($\varepsilon\|$) in the major axis direction of liquid crystal molecules was measured after 2 seconds. Sine waves (0.5 V, 1 kHz) were applied to this device and the dielectric constant ($\varepsilon\perp$) in the minor axis direction of liquid crystal molecules was measured after 2 seconds. The value of dielectric anisotropy was calculated from the equation: $\Delta\varepsilon = \varepsilon\| - \varepsilon\perp$.

(7) Threshold voltage (Vth; measured at 25 °C; V) : An LCD evaluation system Model LCD-5100 made by Otsuka Electronics Co., Ltd. was used for measurement. The light source was a halogen lamp. A sample was poured into

a TN device having a normally white mode, in which the distance between the two glass substrates (cell gap) was 4.45/Δn (micrometers) and the twist angle was 80 degrees. A voltage to be applied to this device (32 Hz, rectangular waves) was stepwise increased in 0.02V increments from 0 V up to 10 V. During the increase, the device was vertically irradiated with light, and the amount of light passing through the device was measured. A voltage-transmittance curve was prepared, in which the maximum amount of light corresponded to 100% transmittance and the minimum amount of light corresponded to 0% transmittance. The threshold voltage was expressed as voltage at 90% transmittance.

(8) Voltage Holding Ratio (VHR-1; measured at 25 °C; %) : A TN device used for measurement had a polyimide-alignment film, and the distance between the two glass substrates (cell gap) was 5 micrometers. A sample was poured into the device, and then this device was sealed with a UV-curable adhesive. A pulse voltage (60 microseconds at 5 V) was applied to the TN device and the device was charged. A decreasing voltage was measured for 16.7 milliseconds with a high-speed voltmeter, and area A between the voltage curve and the horizontal axis in a unit cycle was obtained. Area B was an area without the decrease. The voltage holding ratio was expressed as a percentage of area A to area B.

(9) Voltage Holding Ratio (VHR-2; measured at 80 °C; %) : The voltage holding ratio was measured by the method described above, except that it was measured at 80 °C instead of 25 °C. The resulting values were represented by the symbol VHR-2.

(10) Voltage Holding Ratio (VHR-3; measured at 25 °C; %): The stability to ultraviolet light was evaluated by measuring a voltage holding ratio after irradiation with ultraviolet light. A TN device used for measurement had a polyimide-alignment film and the cell gap was 5 micrometers. A sample was poured into this device, and then the device was irradiated with light for 20 minutes. The light source was an ultra-high-pressure mercury lamp USH-500D (produced by Ushio, Inc.), and the distance between the device and the light source was 20 centimeters. In the measurement of VHR-3, a decreasing voltage was measured for 16.7 milliseconds. A composition having a large VHR-3 has a high stability to ultraviolet light. The VHR-3 is preferably 90% or more, and more preferably 95% or more.

(11) Voltage Holding Ratio (VHR-4; measured at 25 °C; %) : A TN device into which a sample was poured was heated in a thermostatic oven at 80 °C for 500 hours, and then the stability to heat was evaluated by measuring the voltage holding ratio. In the measurement of VHR-4, a decreasing voltage was measured for 16.7 milliseconds. A composition having a large VHR-4 has a high stability to heat.

(12) Response Time (τ; measured at 25 °C; ms): An LCD evaluation system Model LCD-5100 made by Otsuka Electronics Co., Ltd. was used for measurement. The light source was a halogen lamp. The low-pass filter was set at 5 kHz. A sample was poured into a TN device having a normally white mode, in which the distance between the two glass substrates (cell gap) was 5.0 micrometers and the twist angle was 80 degrees. Rectangular waves (60 Hz, 5 V, 0.5 second) were applied to this device. The device was vertically irradiated with light simultaneously, and the amount of light passing through the device was measured. The transmittance was regarded as 100% when the amount of light reached a maximum. The transmittance was regarded as 0% when the amount of light reached a minimum. Rise time (τr; millisecond) was the time required for a change from 90% to 10% transmittance. Fall time (τf; millisecond) was the time required for a change from 10% to 90% transmittance. The response time was expressed as the sum of the rise time and the fall time thus obtained.

(13) Elastic constants (K; measured at 25 °C; pN) : A LCR meter Model HP 4284-A made by Yokokawa Hewlett-Packard, Ltd. was used for measurement. A sample was poured into a homogeneous device in which the distance between the two glass substrates (cell gap) was 20 micrometers. An electric charge of 0 volts to 20 volts was applied to this device, and the electrostatic capacity and the applied voltage were measured. The measured values of the electric capacity (C) and the applied voltage (V) were fitted to equation (2.98) and equation (2.101) on page 75 of "Ekisho Debaisu Handobukku" (Liquid Crystal Device Handbook, in English; The Nikkan Kogyo Shimbun, Ltd., Japan) and the values of K11 and K33 were obtained from equation (2.99). Next, K22 was calculated by plugging the values of K11 and K33 obtained into equation (3.18) on page 171 of the book. The elastic constant K was expressed as an average value of K11, K22 and K33.

(14) Specific Resistance (ρ; measured at 25 °C; Ω cm) : A sample (1.0 mL) was placed in a vessel equipped with electrodes. A DC voltage (10 V) was applied to this vessel, and the DC current was measured after 10 seconds. The specific resistance was calculated from the following equation:

(specific resistance) = [(voltage) × (electric capacity of vessel)] / [(DC current) × (dielectric constant in vacuum)].

(equation 1)

(15) Helical pitch (P; measured at room temperature; micrometer): The helical pitch was measured according to the

wedge method (see page 196 of "Ekishou Binran" (Liquid Crystal Handbook, in English; Maruzen, Co., LTD., Japan, 2000). After a sample had been injected into a wedge-shaped cell and the cell had been allowed to stand at room temperature for 2 hours, the distance (d2-d1) between disclination lines was observed with a polarizing microscope (Nikon Corporation, Model MM-40/60 series). The helical pitch (P) was calculated from the following equation, wherein $\theta$ was defined as the angle of the wedge cell: $P= 2 \times (d2-d1) \times \tan \theta$.

(16) Dielectric constant in the minor axis direction ($\varepsilon\perp$; measured at 25 °C) : A sample was poured into a TN device in which the distance between the two glass substrates (cell gap) was 9 micrometers and the twist angle was 80 degrees. Sine waves (0.5 V, 1 kHz) were applied to this device and the dielectric constant ($\varepsilon\perp$) in the minor axis direction of liquid crystal molecules was measured after 2 seconds.

(17) Alignment stability (Stability of liquid crystal alignment axis): In an FFS device, the change of a liquid crystal alignment axis in a side of electrode was evaluated. A liquid crystal alignment angle [$\varphi$(before)] before stressed in the side of an electrode was measured. Rectangular waves (4.5 V, 60 Hz) were applied for 20 minutes to the device, the device was short circuited for 1 second, and then a liquid crystal alignment angle [$\varphi$(after)] in the side of the electrode was measured after 1 second and 5 minutes. The change ($\Delta\varphi$, deg.) of the liquid crystal alignment angle after 1 second and 5 minutes was calculated from these values by the following equation:

$$\Delta\varphi\ (\text{deg.}) = \varphi(\text{after}) - \varphi(\text{before}) \qquad \text{(equation 2)}$$

These measurements were carried out by referring J. Hilfiker, B. Johs, C. Herzinger, J. F. Elman, E. Montbach, D. Bryant and P. J. Bos, Thin Solid Films, 455-456, (2004) 596-600. The smaller value of $\Delta\varphi$ means a smaller change ratio of the liquid crystal alignment axis, which means that the stability of liquid crystal alignment axis is better.

(18) Flicker rate (measured at 25 °C; %) : A multimedia display tester 3298F made by Yokogawa Electric Corporation was used for measurement. The light source was LED. A sample was poured into a device having a normally black mode, in which the distance between the two glass substrates (cell gap) was 3.5 micrometers and the rubbing direction was antiparallel. This device was sealed with a UV-curable adhesive. A voltage was applied to the device and a voltage was measured when the amount of light passed through the device reached a maximum. The sensor was brought close to the device while this voltage was applied to the device, and the flicker rate displayed was recorded.

(19) Haze (%) : A haze meter HZ-V3 (made by Suga Test Instruments Co. , Ltd.) or the like can be used for measuring haze.

Examples of compositions will be shown below. Component compounds were expressed in terms of symbols according to the definition in Table 3 described below. In Table 3, the configuration of 1,4-cyclohexylene is trans. The parenthesized number next to a symbolized compound represents the chemical formula to which the compound belongs. The symbol (-) means any other liquid crystal compound. The ratio (percentage) of a liquid crystal compound means the percentages by mass (% by mass) based on the mass of the liquid crystal composition excluding additives. Last, the values of characteristics of the composition are summarized.

[Table 3]

Table 3. Method of description of compounds using symbols

| $R-(A_1)-Z_1-\cdots\cdots-Z_n-(A_n)-R'$ | | | |
|---|---|---|---|
| 1) Left-terminal Group R- | Symbol | 4) Ring Structure $-A_n-$ | Symbol |
| $C_nH_{2n+1}-$<br>$C_nH_{2n+1}O-$ | n-<br>nO- | 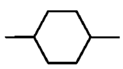 | H |
| $C_mH_{2m+1}OC_nH_{2n}-$<br>$CH_2=CH-$ | mOn-<br>V- | 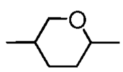 | dh |
| $C_nH_{2n+1}-CH=CH-$<br>$CH_2=CH-C_nH_{2n}-$ | nV-<br>Vn- | 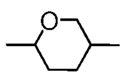 | Dh |
| $C_mH_{2m+1}-CH=CH-C_nH_{2n}-$<br>$CF_2=CH-$ | mVn-<br>VFF- | 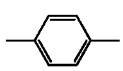 | B |

(continued)

| $R-(A_1)-Z_1-\cdots\cdots-Z_n-(A_n)-R'$ | | | |
|---|---|---|---|
| $CF_2=CH-C_nH_{2n}-$<br>$F-C_nH_{2n}-$ | VFFn-<br>Fn- | 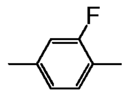 | B(F) |
| 2) Right-terminal Group -R' | Symbol | | |
| $-C_nH_{2n+1}$<br>$-OC_nH_{2n+1}$<br>$-CH=CH_2$ | -n<br>-On<br>-V | 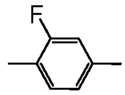 | B(2F) |
| $-CH=CH-C_nH_{2n+1}$<br>$-C_nH_{2n}-CH=CH_2$<br>$-C_nH_{2m}-CH=CH-C_nH_{2n+1}$ | -Vn<br>-nV<br>-mVn | 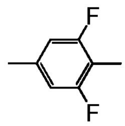 | B(F,F) |
| $-CH=CF_2$<br>$-COOCH_3$<br>-F<br>-Cl | -VFF<br>-EMe<br>-F<br>-CL | 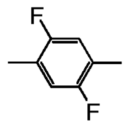 | B(2F,5F) |
| $-OCF_3$<br>$-CF_3$ | -OCF3<br>-CF3 | 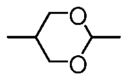 | G |
| -CN | -C | | |
| 3) Bonding Group $-Z_n-$ | Symbol | 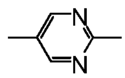 | Py |
| $-C_nH_{2n}-$<br>-COO-<br>-CH=CH- | n<br>E<br>V | 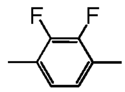 | B(2F,3F) |
| -C≡C-<br>$-CF_2O-$<br>$-CH_2O-$ | T<br>X<br>1O | | |
| 5) Examples of Description | | | |
| Example 1. 3-HH-V | | Example 2. 3-HHB(2F,3F)-O2 | |
| 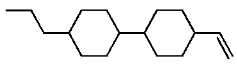 | | 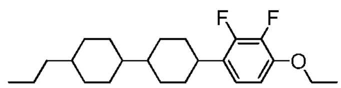 | |
| Example 3. 4-GB(F)B(F,F)XB(F,F)-F | | Example 4. 2-BB(F)B(F.F)-F | |
| 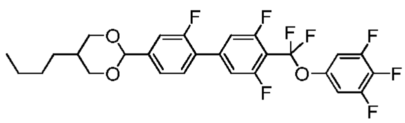 | | 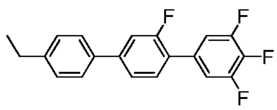 | |

Example 1

| | | |
|---|---|---|
| 5-HXB(F,F)-F | (1-1) | 3% |
| 3-HHXB(F,F)-F | (1-4) | 5% |
| 3-HGB(F,F)-F | (1-6) | 3% |
| 3-HB(F)B(F,F)-F | (1-9) | 5% |
| 3-BB(F,F)XB(F,F)-F | (1-18) | 4% |

(continued)

| | | |
|---|---|---|
| 3-HHBB(F,F)-F | (1-19) | 5% |
| 4-HHBB(F,F)-F | (1-19) | 4% |
| 3-GBB(F)B(F,F)-F | (1-22) | 3% |
| 4-GBB(F)B(F,F)-F | (1-22) | 3% |
| 5-BB(F)B(F,F)XB(F)B(F,F)-F | (1-31) | 3% |
| 3-BB(2F,3F)XB(F,F)-F | (1-32) | 3% |
| 3-HB-CL | (1) | 3% |
| 3-HHB-OCF3 | (1) | 3% |
| 3-HH2BB(F,F)-F | (1) | 3% |
| 3-HHB(F,F)XB(F,F)-F | (1) | 3% |
| 3-HBB(2F,3F)XB(F,F)-F | (1) | 4% |
| 3-HH-V | (2-1) | 20% |
| 3-HH-V1 | (2-1) | 7% |
| 5-HB-O2 | (2-2) | 3% |
| 3-HHEH-3 | (2-4) | 3% |
| 3-HBB-2 | (2-6) | 7% |
| 5-B(F)BB-3 | (2-7) | 3% |

NI= 92.7 °C; Tc< -20 °C; Δn= 0.114; Δε= 6.9; Vth= 1.53 V; η= 24.8 mPa•s.

Example 2

| | | |
|---|---|---|
| 5-HXB(F,F)-F | (1-1) | 4% |
| 3-HHXB(F,F)-F | (1-4) | 5% |
| 3-HB(F)B(F,F)-F | (1-9) | 3% |
| V-HB(F)B(F,F)-F | (1-9) | 3% |
| 2-HHB(F)B(F,F)-F | (1-20) | 3% |
| 3-HHB(F)B(F,F)-F | (1-20) | 5% |
| 3-GBB(F)B(F,F)-F | (1-22) | 3% |
| 4-GBB(F)B(F,F)-F | (1-22) | 3% |
| 2-BB(F)B(F,F)XB(F)-F | (1-28) | 3% |
| 3-BB(F)B(F,F)XB(F)-F | (1-28) | 3% |
| 4-BB(F)B(F,F)XB(F)-F | (1-28) | 3% |
| 5-BB(F)B(F,F)XB(F,F)-F | (1-29) | 3% |
| 5-HB-CL | (1) | 3% |
| 3-dhB(F,F)B(F,F)XB(F)B(F,F)-F | (1) | 3% |
| 2-HH-5 | (2-1) | 6% |
| 3-HH-V | (2-1) | 9% |
| 3-HH-V1 | (2-1) | 5% |

(continued)

| | | |
|---|---|---|
| 4-HH-V | (2-1) | 8% |
| 4-HH-V1 | (2-1) | 6% |
| 5-HB-O2 | (2-2) | 5% |
| 3-HHEH-3 | (2-4) | 3% |
| 4-HHEH-3 | (2-4) | 3% |
| V2-BB(F)B-1 | (2-8) | 3% |
| 1O1-HBBH-3 | (-) | 5% |

NI= 94.0 °C; Tc< -20 °C; Δn= 0.114; Δε= 6.9; Vth= 1.54 V; η= 23.5 mPa•s.

Example 3

| | | |
|---|---|---|
| 3-HHEB(F,F)-F | (1-3) | 5% |
| 3-HHXB(F,F)-F | (1-4) | 7% |
| 5-HBEB(F,F)-F | (1-10) | 5% |
| 3-BB(F,F)XB(F,F)-F | (1-18) | 10% |
| 2-HHB(F)B(F,F)-F | (1-20) | 3% |
| 5-HHB(F,F)XB(F,F)-F | (1) | 6% |
| 3-HBB(2F,3F)XB(F,F)-F | (1) | 5% |
| 2-HH-3 | (2-1) | 8% |
| 3-HH-V | (2-1) | 20% |
| 3-HH-V1 | (2-1) | 7% |
| 4-HH-V | (2-1) | 6% |
| 5-HB-O2 | (2-2) | 5% |
| V2-B2BB-1 | (2-9) | 3% |
| 3-HHEBH-3 | (2-11) | 5% |
| 3-HHEBH-5 | (2-11) | 5% |

NI= 90.3 °C; Tc< -20 °C; Δn= 0.088; Δε= 5.4; Vth= 1.69 V; η= 13.7 mPa•s.

Example 4

| | | |
|---|---|---|
| 3-BB(F,F)XB(F,F)-F | (1-18) | 9% |
| 3-HHBB(F,F)-F | (1-19) | 5% |
| 4-HHBB(F,F)-F | (1-19) | 4% |
| 3-HBBXB(F,F)-F | (1-23) | 3% |
| 3-BB(F)B(F,F)XB(F)-F | (1-28) | 3% |
| 4-BB(F)B(F,F)XB(F)-F | (1-28) | 3% |
| 3-BB(F)B(F,F)XB(F,F)-F | (1-29) | 3% |

(continued)

| | | |
|---|---|---|
| 5-BB(F)B(F,F)XB(F,F)-F | (1-29) | 3% |
| 3-HHB(F,F)XB(F,F)-F | (1) | 3% |
| 5-HHB(F,F)XB(F,F)-F | (1) | 3% |
| 2-HH-3 | (2-1) | 5% |
| 3-HH-5 | (2-1) | 5% |
| 3-HH-V | (2-1) | 20% |
| 3-HH-VFF | (2-1) | 5% |
| 5-HB-O2 | (2-2) | 6% |
| 3-HHB-1 | (2-5) | 3% |
| 3-HHB-3 | (2-5) | 3% |
| V-HHB-1 | (2-5) | 6% |
| V-HBB-2 | (2-6) | 6% |
| 3-HHEBH-4 | (2-11) | 2% |

NI= 94.5 °C; Tc< -20 °C; Δn= 0.111; Δε= 6.8; Vth= 1.55 V; η= 16.6 mPa•s.

Example 5

| | | |
|---|---|---|
| 3-HHXB(F,F)-F | (1-4) | 7% |
| 3-BB(F,F)XB(F,F)-F | (1-18) | 5% |
| 3-HHBB(F,F)-F | (1-19) | 6% |
| 4-HHBB(F,F)-F | (1-19) | 5% |
| 4-BB(F)B(F,F)XB(F)-F | (1-28) | 5% |
| 3-BB(F)B(F,F)XB(F,F)-F | (1-29) | 4% |
| 5-BB(F)B(F,F)XB(F,F)-F | (1-29) | 4% |
| 3-HHB-OCF3 | (1) | 5% |
| 3-HH-V | (2-1) | 27% |
| 3-HH-V1 | (2-1) | 4% |
| F3-HH-V | (2-1) | 10% |
| 1V2-HH-3 | (2-1) | 5% |
| 3-HHB-O1 | (2-5) | 2% |
| V-HHB-1 | (2-5) | 5% |
| 2-BB(F)B-3 | (2-8) | 6% |

NI= 91.8 °C; Tc< -20 °C; Δn= 0.107; Δε= 5.4; Vth= 1.71 V; η= 13.2 mPa•s.

Example 6

| | | |
|---|---|---|
| 3-HGB(F,F)-F | (1-6) | 4% |

(continued)

| | | |
|---|---|---|
| 5-GHB(F,F)-F | (1-7) | 3% |
| 3-GB(F,F)XB(F,F)-F | (1-14) | 3% |
| 3-HHBB(F,F)-F | (1-19) | 4% |
| 4-HHBB(F,F)-F | (1-19) | 3% |
| 2-HHB(F)B(F,F)-F | (1-20) | 4% |
| 3-GBB(F)B(F,F)-F | (1-22) | 3% |
| 4-GBB(F)B(F,F)-F | (1-22) | 4% |
| 2-dhBB(F,F)XB(F,F)-F | (1-25) | 3% |
| 7-HB(F,F)-F | (1) | 3% |
| 3-HGB(F,F)XB(F,F)-F | (1) | 3% |
| 3-dhB(F,F)B(F,F)XB(F)B(F,F)-F | (1) | 3% |
| 2-HH-3 | (2-1) | 10% |
| 2-HH-5 | (2-1) | 3% |
| 3-HH-V | (2-1) | 26% |
| 1V2-HH-3 | (2-1) | 4% |
| 1V2-BB-1 | (2-3) | 3% |
| 3-HB(F)HH-2 | (2-10) | 4% |
| 5-HBB(F)B-2 | (2-13) | 5% |
| 3-BB(2F,5F)B-3 | (2) | 5% |

NI= 91.5 C; Tc< -20 C; $\Delta$n= 0.106; $\Delta\varepsilon$= 5.8; Vth= 1.61 V; $\eta$= 21.1 mPa•s.

Example 7

| | | |
|---|---|---|
| 3-HBB(F,F)-F | (1-8) | 4% |
| 5-HBB(F,F)-F | (1-8) | 3% |
| 3-BB(F)B(F,F)-F | (1-15) | 4% |
| 2-dhBB(F,F)XB(F,F)-F | (1-25) | 3% |
| 2-BB(F)B(F,F)XB(F)-F | (1-28) | 5% |
| 4-BB(F)B(F,F)XB(F)-F | (1-28) | 3% |
| 3-BB(F)B(F,F)XB(F,F)-F | (1-29) | 3% |
| 3-BB(F,F)XB(F)B(F,F)-F | (1-30) | 3% |
| 5-BB(F)B(F,F)XB(F)B(F,F)-F | (1-31) | 3% |
| 3-HH2BB(F,F)-F | (1) | 3% |
| 4-HH2BB(F,F)-F | (1) | 3% |
| 3-HGB(F,F)XB(F,F)-F | (1) | 3% |
| 3-HBB(2F,3F)XB(F,F)-F | (1) | 3% |
| 2-HH-5 | (2-1) | 5% |
| 3-HH-V | (2-1) | 23% |

(continued)

| | | |
|---|---|---|
| 3-HH-V1 | (2-1) | 3% |
| 4-HH-V1 | (2-1) | 4% |
| 5-HB-O2 | (2-2) | 3% |
| 7-HB-1 | (2-2) | 3% |
| VFF-HHB-1 | (2-5) | 3% |
| VFF-HHB-O1 | (2-5) | 8% |
| 5-HBB(F)B-2 | (2-13) | 5% |

NI= 94.3 °C; Tc< -20 °C; Δn= 0.122; Δε= 7.7; Vth= 1.45 V; η= 23.0 mPa•s.

Example 8

| | | |
|---|---|---|
| 3-HHB(F,F)-F | (1-2) | 8% |
| 3-GB(F)B(F,F)-F | (1-12) | 3% |
| 3-BB(F,F)XB(F,F)-F | (1-18) | 8% |
| 3-HHBB(F,F)-F | (1-19) | 5% |
| 3-GB(F)B(F,F)XB(F,F)-F | (1-27) | 5% |
| 5-GB(F,F)XB(F)B(F,F)-F | (1) | 3% |
| 3-HH-V | (2-1) | 25% |
| 3-HH-V1 | (2-1) | 8% |
| 3-HH-VFF | (2-1) | 6% |
| 1V2-HH-3 | (2-1) | 8% |
| V2-BB-1 | (2-3) | 2% |
| 3-HHB-3 | (2-5) | 4% |
| V-HHB-1 | (2-5) | 5% |
| 5-HB(F)BH-3 | (2-12) | 5% |
| 5-HBBH-3 | (2) | 5% |

NI= 92.4 °C; Tc< -20 °C; Δn= 0.096; Δε= 4.6; Vth= 1.80 V; η= 16.2 mPa•s.

Example 9

| | | |
|---|---|---|
| 3-HHEB(F,F)-F | (1-3) | 6% |
| 3-HBEB(F,F)-F | (1-10) | 3% |
| 5-HBEB(F,F)-F | (1-10) | 3% |
| 3-BB(F)B(F,F)-F | (1-15) | 3% |
| 4-HHBB(F,F)-F | (1-19) | 5% |
| 3-HHB(F)B(F,F)-F | (1-20) | 3% |
| 3-GBB(F)B(F,F)-F | (1-22) | 3% |

(continued)

| | | |
|---|---|---|
| 3-GB(F)B(F,F)XB(F,F)-F | (1-27) | 4% |
| 4-GB(F)B(F,F)XB(F,F)-F | (1-27) | 3% |
| 5-HB-CL | (1) | 4% |
| 3-HHB-OCF3 | (1) | 5% |
| 5-HEB(F,F)-F | (1) | 3% |
| 3-HHB(F,F)XB(F,F)-F | (1) | 3% |
| 5-HHB(F,F)XB(F,F)-F | (1) | 3% |
| 3-HGB(F,F)XB(F,F)-F | (1) | 3% |
| 2-HH-5 | (2-1) | 3% |
| 3-HH-5 | (2-1) | 4% |
| 3-HH-V | (2-1) | 20% |
| 4-HH-V | (2-1) | 4% |
| 1V2-HH-3 | (2-1) | 3% |
| 3-HHEH-3 | (2-4) | 5% |
| 5-B(F)BB-2 | (2-7) | 5% |
| 5-B(F)BB-3 | (2-7) | 2% |

NI= 91.2 °C; Tc< -20 °C; Δn= 0.104; Δε= 6.8; Vth= 1.54 V; η= 23.0 mPa•s.

Example 10

| | | |
|---|---|---|
| 3-HHXB(F,F)-F | (1-4) | 7% |
| 5-HBB(F,F)-F | (1-8) | 3% |
| 3-BB(F)B(F,F)-F | (1-15) | 4% |
| 3-BB(F)B(F,F)-CF3 | (1-16) | 4% |
| 3-BB(F,F)XB(F,F)-F | (1-18) | 3% |
| 3-GBB(F)B(F,F)-F | (1-22) | 3% |
| 4-GBB(F)B(F,F)-F | (1-22) | 4% |
| 3-BB(F)B(F,F)XB(F,F)-F | (1-29) | 4% |
| 5-BB(F)B(F,F)XB(F,F)-F | (1-29) | 3% |
| 3-HH-V | (2-1) | 22% |
| 3-HH-V1 | (2-1) | 6% |
| 5-HB-O2 | (2-2) | 9% |
| 7-HB-1 | (2-2) | 4% |
| V2-BB-1 | (2-3) | 3% |
| 3-HHB-1 | (2-5) | 4% |
| V-HHB-1 | (2-5) | 3% |
| 1V-HBB-2 | (2-6) | 5% |
| 5-HB(F)BH-3 | (2-12) | 3% |

(continued)

| | | |
|---|---|---|
| 5-HBB(F)B-2 | (2-13) | 6% |

NI= 91.1 C; Tc< -20 C; Δn= 0.126; Δε= 6.3; Vth= 1.60 V; η= 17.4 mPa•s.

Example 11

| | | |
|---|---|---|
| 3-HHEB(F,F)-F | (1-3) | 5% |
| 5-HBEB(F,F)-F | (1-10) | 3% |
| 3-BB(F,F)XB(F,F)-F | (1-18) | 10% |
| 3-HHBB(F,F)-F | (1-19) | 3% |
| 4-HHBB(F,F)-F | (1-19) | 3% |
| 7-HB(F,F)-F | (1) | 4% |
| 3-dhB(F,F)B(F,F)XB(F)B(F,F)-F | (1) | 5% |
| 2-HH-5 | (2-1) | 5% |
| 3-HH-V | (2-1) | 25% |
| 3-HH-V1 | (2-1) | 3% |
| 3-HH-VFF | (2-1) | 8% |
| 3-HHB-1 | (2-5) | 5% |
| 3-HHB-3 | (2-5) | 5% |
| 3-HHB-O1 | (2-5) | 4% |
| 3-HHEBH-3 | (2-11) | 3% |
| 3-HHEBH-4 | (2-11) | 3% |
| 3-HHEBH-5 | (2-11) | 3% |
| 3-BB(2F,5F)B-3 | (2) | 3% |

NI= 97.7 °C; Tc< -20 °C; Δn= 0.092; Δε= 4.7; Vth= 1.77 V; η= 14.4 mPa•s.

Example 12

| | | |
|---|---|---|
| 3-HBB(F,F)-F | (1-8) | 3% |
| 5-HBB(F,F)-F | (1-8) | 3% |
| 4-BB(F)B(F,F)XB(F)-F | (1-28) | 5% |
| 3-BB(F)B(F,F)XB(F,F)-F | (1-29) | 3% |
| 3-BB(F,F)XB(F)B(F,F)-F | (1-30) | 3% |
| 5-BB(F)B(F,F)XB(F)B(F,F)-F | (1-31) | 4% |
| 3-HH2BB(F,F)-F | (1) | 3% |
| 4-HH2BB(F,F)-F | (1) | 4% |
| 2-HH-5 | (2-1) | 8% |
| 3-HH-V | (2-1) | 27% |

(continued)

| | | |
|---|---|---|
| 4-HH-V1 | (2-1) | 6% |
| 5-HB-O2 | (2-2) | 2% |
| 7-HB-1 | (2-2) | 3% |
| 3-HHB-1 | (2-5) | 3% |
| VFF-HHB-1 | (2-5) | 3% |
| VFF-HHB-O1 | (2-5) | 8% |
| V-HBB-2 | (2-6) | 5% |
| 2-BB(2F,3F)B-3 | (3-9) | 4% |
| 3-HBB(2F,3F)-O2 | (3-10) | 3% |

NI= 92.7 °C; Tc< -20 °C; $\Delta$n= 0.114; $\Delta\varepsilon$= 4.3; Vth= 1.80 V; $\eta$= 13.8 mPa•s.

Example 13

| | | |
|---|---|---|
| 3-HHEB(F,F)-F | (1-3) | 4% |
| 3-HBEB(F,F)-F | (1-10) | 3% |
| 5-HBEB(F,F)-F | (1-10) | 3% |
| 3-BB(F)B(F,F)-F | (1-15) | 3% |
| 3-HHBB(F,F)-F | (1-19) | 4% |
| 4-HHBB(F,F)-F | (1-19) | 5% |
| 3-HBBXB(F,F)-F | (1-23) | 6% |
| 3-GB(F)B(F,F)XB(F,F)-F | (1-27) | 4% |
| 4-GB(F)B(F,F)XB(F,F)-F | (1-27) | 4% |
| 5-HB-CL | (1) | 2% |
| 3-HHB-OCF3 | (1) | 4% |
| 5-HEB(F,F)-F | (1) | 3% |
| 5-HHB(F,F)XB(F,F)-F | (1) | 4% |
| 3-HGB(F,F)XB(F,F)-F | (1) | 5% |
| 3-HH-5 | (2-1) | 3% |
| 3-HH-V | (2-1) | 15% |
| 3-HH-V1 | (2-1) | 3% |
| 4-HH-V | (2-1) | 3% |
| F3-HH-V | (2-1) | 3% |
| 1V2-HH-3 | (2-1) | 3% |
| 5-B(F)BB-2 | (2-7) | 5% |
| 5-B(F)BB-3 | (2-7) | 2% |
| 3-HB(2F,3F)-O2 | (3-1) | 3% |
| 3-BB(2F,3F)-O2 | (3-4) | 2% |
| 3-HHB(2F,3F)-O2 | (3-6) | 4% |

NI= 90.9 °C; Tc< -20 °C; Δn= 0.112; Δε= 7.5; Vth= 1.48 V; η= 25.5 mPa•s.

Example 14

| | | |
|---|---|---|
| 2-HHB(F,F)-F | (1-2) | 6% |
| 3-HHB(F,F)-F | (1-2) | 6% |
| 3-HBB(F,F)-F | (1-8) | 18% |
| 2-HHBB(F,F)-F | (1-19) | 4% |
| 3-HHBB(F,F)-F | (1-19) | 4% |
| 4-HHBB(F,F)-F | (1-19) | 3% |
| 5-HHBB (F, F) -F | (1-19) | 2% |
| 3-HHB-F | (1) | 4% |
| 2-HHB(F)-F | (1) | 6% |
| 3-HHB(F)-F | (1) | 7% |
| 5-HHB(F)-F | (1) | 6% |
| 3-HH-4 | (2-1) | 10% |
| 3-HB-O2 | (2-2) | 8% |
| 5-HB-O2 | (2-2) | 8% |
| 3-HHB-1 | (2-5) | 5% |
| 3-HHB-O1 | (2-5) | 3% |

NI= 101.9 °C; Tc< -40 °C; Δn= 0.098; Δε= 5.2; Vth= 1.85 V; η= 21.7 mPa•s.

Example 15

| | | |
|---|---|---|
| 2-HHB(F,F)-F | (1-2) | 7% |
| 3-HHB(F,F)-F | (1-2) | 7% |
| 3-HBB(F,F)-F | (1-8) | 4% |
| 2-HHBB(F,F)-F | (1-19) | 4% |
| 3-HHBB(F,F)-F | (1-19) | 4% |
| 4-HHBB(F,F)-F | (1-19) | 4% |
| 5-HHBB(F,F)-F | (1-19) | 4% |
| 3-HHB-F | (1) | 4% |
| 2-HHB(F)-F | (1) | 6% |
| 3-HHB(F)-F | (1) | 7% |
| 5-HHB(F)-F | (1) | 6% |
| 3-H2HB(F,F)-F | (1) | 7% |
| 5-H2HB(F,F)-F | (1) | 7% |
| 5-HB-O2 | (2-2) | 7% |
| 7-HB-1 | (2-2) | 15% |

(continued)

| | | |
|---|---|---|
| 3-HHB-1 | (2-5) | 4% |
| 3-HHB-O1 | (2-5) | 3% |

NI= 98.8 °C; Tc< -40 °C; $\Delta n$= 0.088; $\Delta\varepsilon$= 5.0; Vth= 1.83 V; $\eta$= 24.7 mPa•s.

Example 16

The following optically active compound (4-5) was added to the composition described in Example 15 in the ratio of 0.2% by mass.

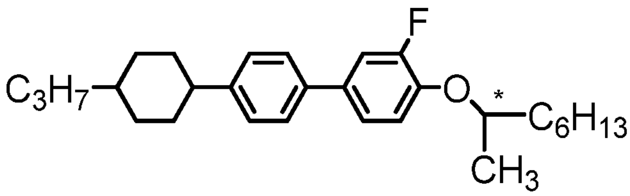

(4-5)

Production of the liquid crystal dimming device

The liquid crystal dimming device having a dimming material sandwiched between linear polarizers is produced. The dimming material has a laminated structure of a first polycarbonate film, a liquid crystal layer and a second polycarbonate film. The first and second polycarbonate films are transparent, and have a transparent electrode and an alignment layer. The liquid crystal layer is filled with a liquid crystal composition including at least one compound selected from the group of compounds represented by formula (1) as a first component and having positive dielectric anisotropy.

When the characteristics of the liquid crystal composition or the liquid crystal display device are measured, a device having a glass substrate is usually used. In the liquid crystal dimming device, a plastic film is sometimes used as a substrate. Then, a device in which the substrate was polycarbonate was produced and the characteristics such as a threshold voltage and a response time were measured. The measured value was compared with these of a device having a glass plate. As a result, two types of measured values were almost the same. Thus, the substrate can be regarded as carbonate even if a glass substrate is used, when the characteristics of the liquid crystal composition or the liquid crystal dimming device are measured. Here, measurement using a device having a glass substrate was described with regard to characteristics such as a threshold voltage and a response time.

[Industrial applicability]

The liquid crystal dimming device including a liquid crystal composition for dimming of the invention can be used for dimming windows or smart windows, since it has characteristics such as a large voltage holding ratio, a low threshold voltage, a large contrast ratio and a long service life.

## Claims

1. A liquid crystal composition for dimming, having a nematic phase and positive dielectric anisotropy and including at least one compound selected from the group of compounds represented by formula (1) as a first component:

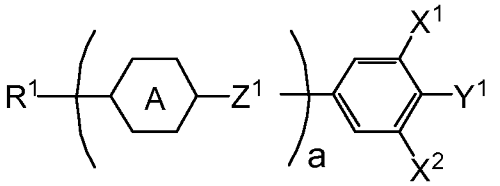

(1)

in formula (1), $R^1$ is alkyl having 1 to 12 carbons, alkoxy having 1 to 12 carbons or alkenyl having 2 to 12 carbons;

ring A is 1,4-cyclohexylene, 1,4-phenylene, 2-fluoro-1,4-phenylene, 2,3-difluoro-1,4-phenylene, 2,6-difluoro-1,4-phenylene, pyrimidine-2,5-diyl, 1,3-dioxane-2,5-diyl or tetrahydropyran-2,5-diyl; $Z^1$ is a single bond, ethylene, carbonyloxy or difluoromethyleneoxy; $X^1$ and $X^2$ are independently hydrogen or fluorine; $Y^1$ is fluorine, chlorine, alkyl having 1 to 12 carbons in which at least one hydrogen has been replaced by fluorine or chlorine, alkoxy having 1 to 12 carbons in which at least one hydrogen has been replaced by fluorine or chlorine or alkenyloxy having 2 to 12 carbons in which at least one hydrogen has been replaced by fluorine or chlorine; and a is 1, 2, 3 or 4.

**2.** The liquid crystal composition for dimming according to claim 1, including at least one compound selected from the group of compounds represented by formula (1-1) to formula (1-35) as the first component:

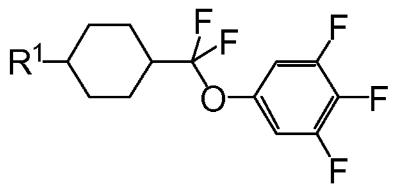

(1-1)

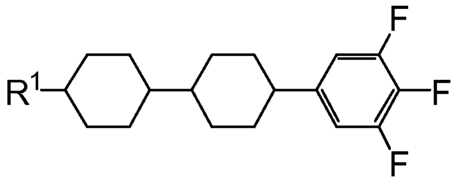

(1-2)

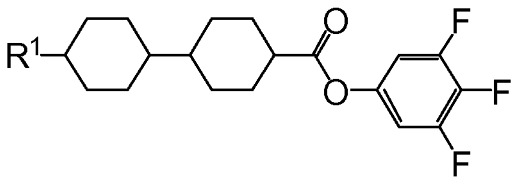

(1-3)

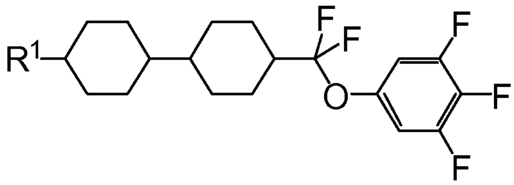

(1-4)

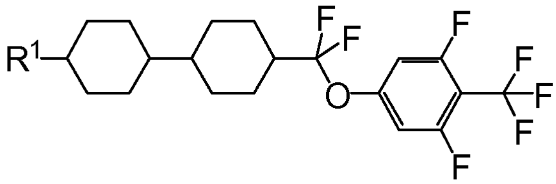

(1-5)

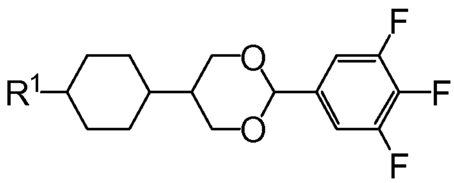

(1-6)

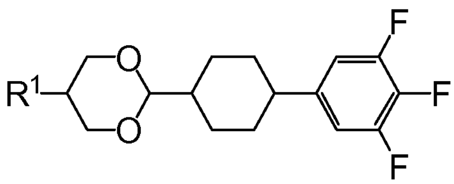

(1-7)

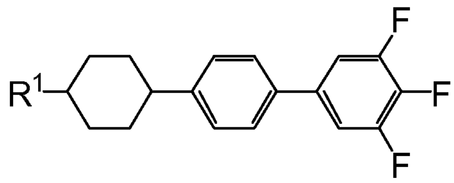
(1-8)

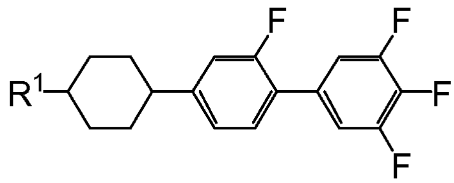
(1-9)

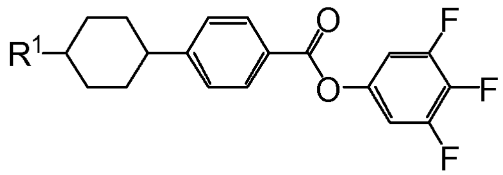
(1-10)

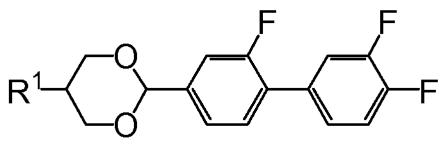
(1-11)

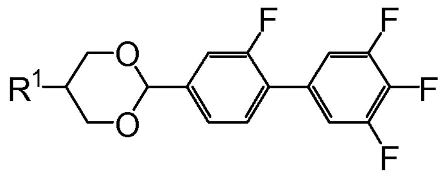
(1-12)

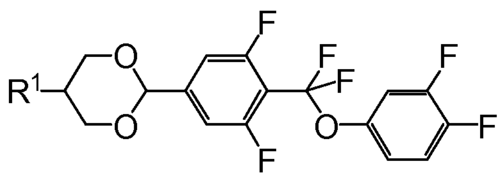
(1-13)

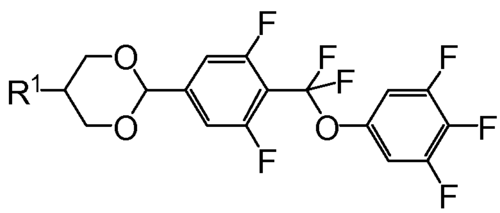
(1-14)

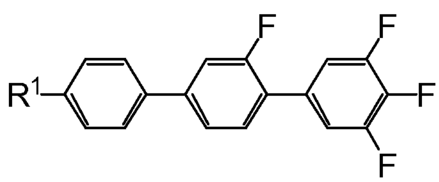
(1-15)

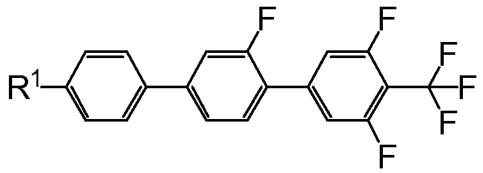

(1-16)

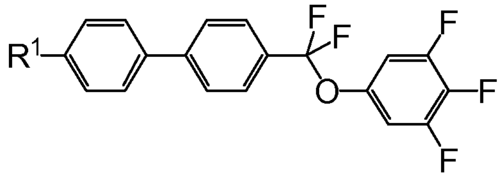

(1-17)

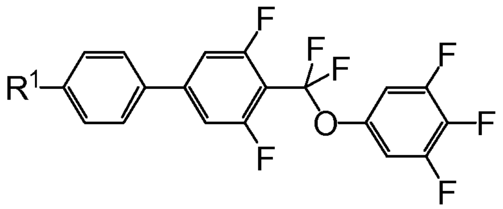

(1-18)

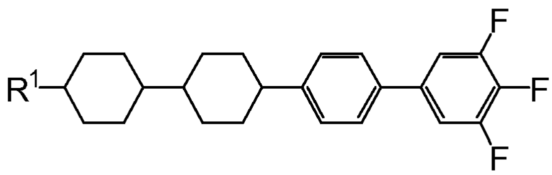

(1-19)

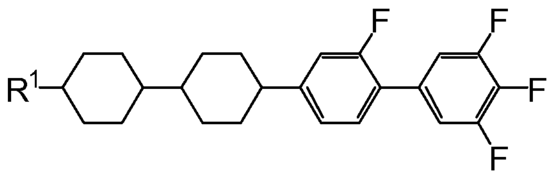

(1-20)

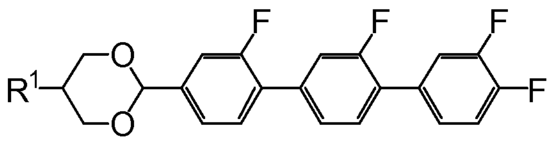

(1-21)

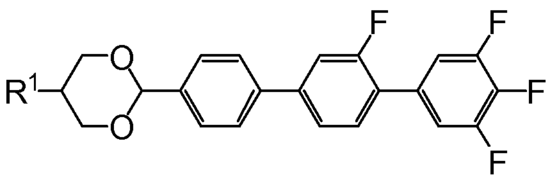

(1-22)

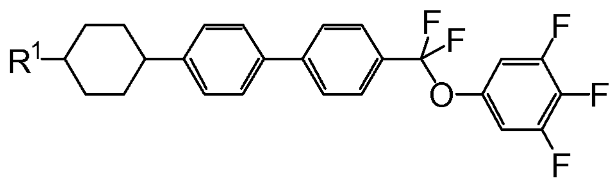

(1-23)

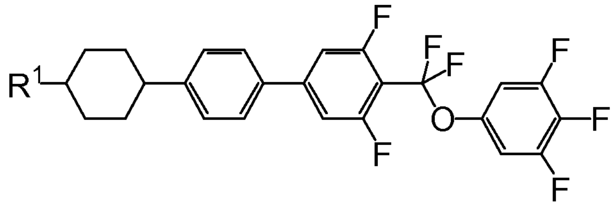

(1-24)

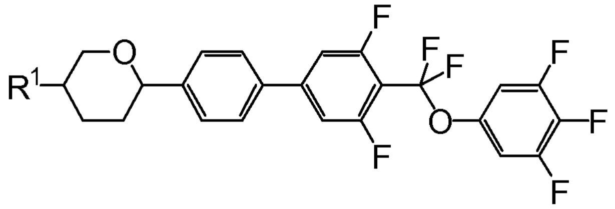

(1-25)

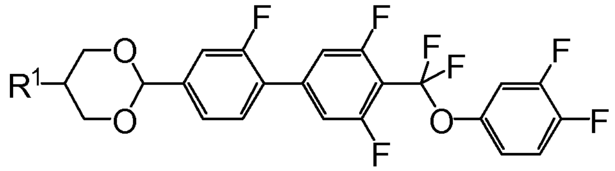

(1-26)

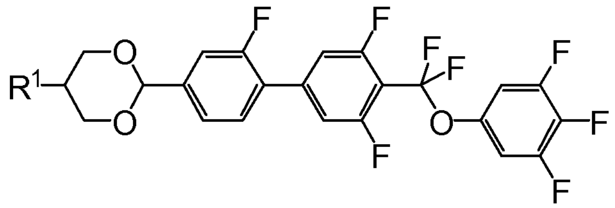

(1-27)

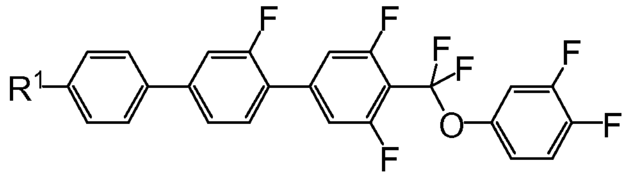

(1-28)

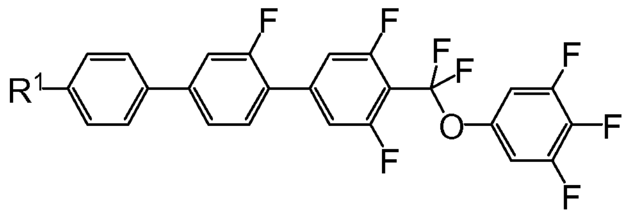

(1-29)

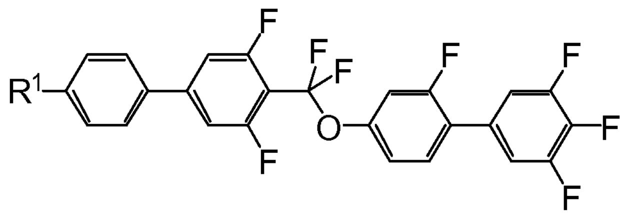

(1-30)

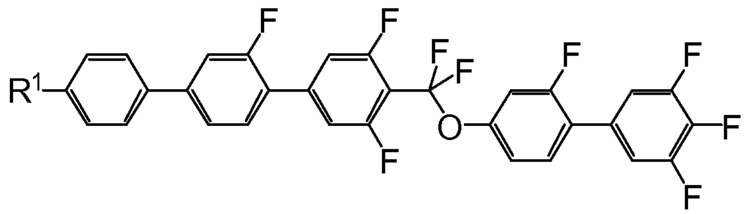

(1-31)

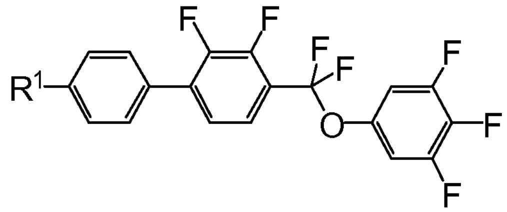

(1-32)

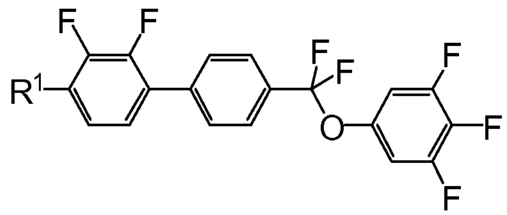

(1-33)

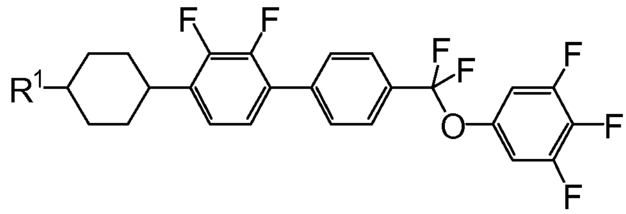

(1-34)

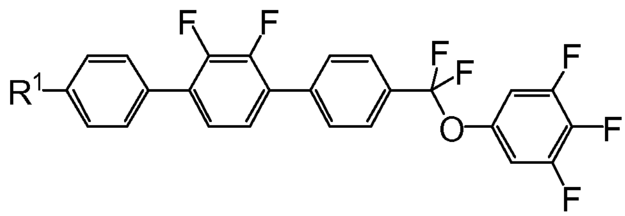

(1-35)

in formula (1-1) to formula (1-35), $R^1$ is alkyl having 1 to 12 carbons, alkoxy having 1 to 12 carbons or alkenyl having 2 to 12 carbons.

**3.** The liquid crystal composition for dimming according to claim 1 or 2, wherein the ratio of the first component is in the range of 5% by mass to 90% by mass.

**4.** The liquid crystal composition for dimming according to any one of claims 1 to 3, including at least one compound selected from the group of compounds represented by formula (2) as a second component:

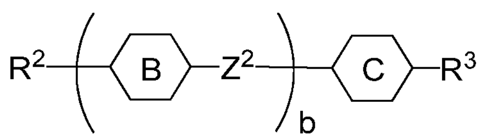

(2)

in formula (2), $R^2$ and $R^3$ are independently alkyl having 1 to 12 carbons, alkoxy having 1 to 12 carbons, alkenyl having 2 to 12 carbons or alkenyl having 2 to 12 carbons in which at least one hydrogen has been replaced by fluorine or chlorine; ring B and ring C are independently 1,4-cyclohexylene, 1,4-phenylene, 2-fluoro-1,4-phenylene

or 2,5-difluoro-1,4-phenylene; $Z^2$ is a single bond, ethylene or carbonyloxy; and b is 1, 2 or 3.

**5.** The liquid crystal composition for dimming according to any one of claims 1 to 4, including at least one compound selected from the group of compounds represented by formula (2-1) to formula (2-13) as the second component:

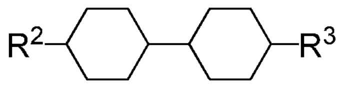
(2-1)

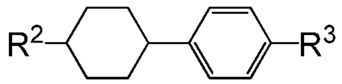
(2-2)

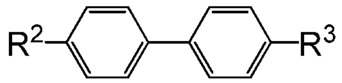
(2-3)

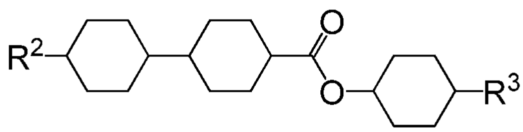
(2-4)

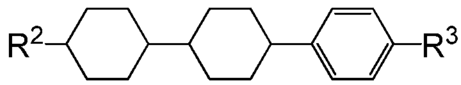
(2-5)

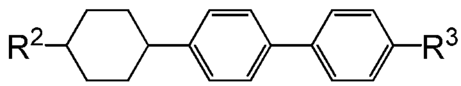
(2-6)

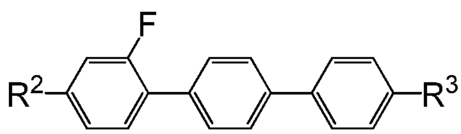
(2-7)

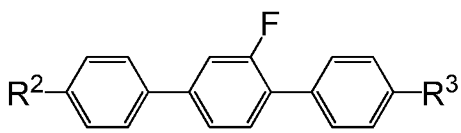
(2-8)

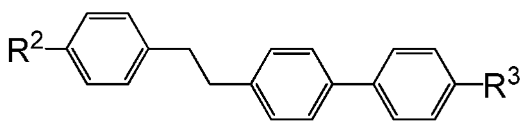
(2-9)

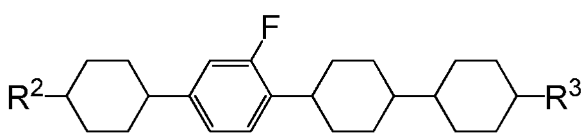
(2-10)

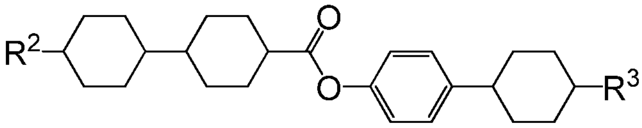
(2-11)

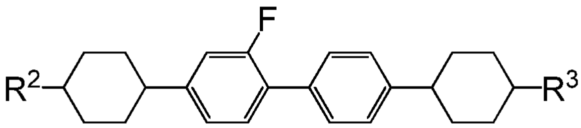
(2-12)

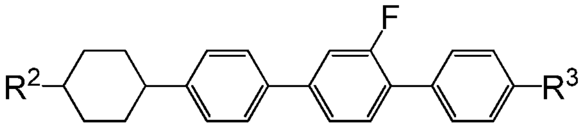
(2-13)

in formula (2-1) to formula (2-13), $R^2$ and $R^3$ are independently alkyl having 1 to 12 carbons, alkoxy having 1 to 12 carbons, alkenyl having 2 to 12 carbons or alkenyl having 2 to 12 carbons in which at least one hydrogen has been replaced by fluorine or chlorine.

**6.** The liquid crystal composition for dimming according to claim 4 or 5, wherein the ratio of the second component is in the range of 5% by mass to 90% by mass.

**7.** The liquid crystal composition for dimming according to any one of claims 1 to 6, including at least one compound selected from the group of compounds represented by formula (3) as a third component:

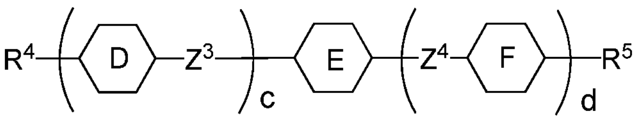
(3)

in formula (3), $R^4$ and $R^5$ are independently alkyl having 1 to 12 carbons, alkoxy having 1 to 12 carbons, alkenyl having 2 to 12 carbons or alkenyloxy having 2 to 12 carbons; ring D and ring F are independently 1,4-cyclohexylene, 1,4-cyclohexenylene, tetrahydropyran-2,5-diyl, 1,4-phenylene, 1,4-phenylene in which at least one hydrogen has been replaced by fluorine or chlorine, naphthalene-2,6-diyl, naphthalene-2, 6-diyl in which at least one hydrogen has been replaced by fluorine or chlorine, chromane-2,6-diyl or chromane-2,6-diyl in which at least one hydrogen has been replaced by fluorine or chlorine; ring E is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochromane-2,6-diyl; $Z^3$ and $Z^4$ are independently a single bond, ethylene, carbonyloxy or methyleneoxy; c is 1, 2 or 3, and d is 0 or 1; and the sum of c and d is 3 or less.

**8.** The liquid crystal composition for dimming according to any one of claims 1 to 7, including at least one compound selected from the group of compounds represented by formula (3-1) to formula (3-22) as the third component.

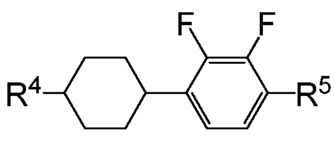
(3-1)

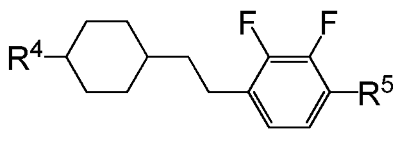
(3-2)

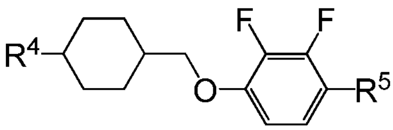

(3-3)

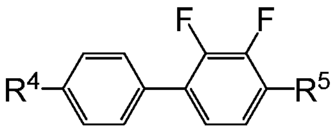

(3-4)

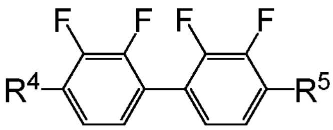

(3-5)

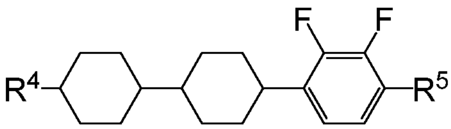

(3-6)

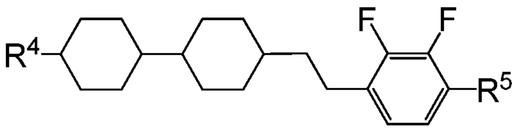

(3-7)

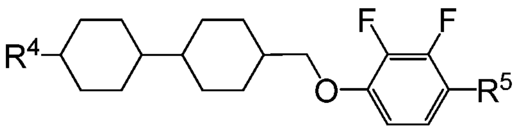

(3-8)

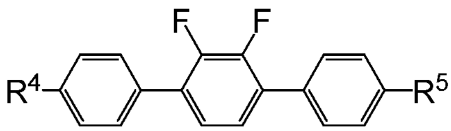

(3-9)

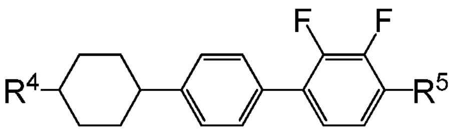

(3-10)

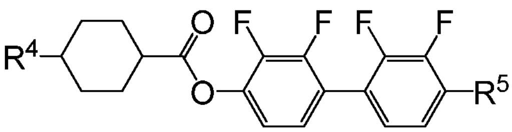

(3-11)

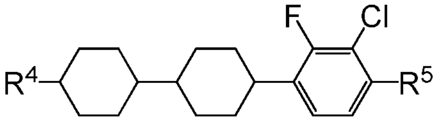

(3-12)

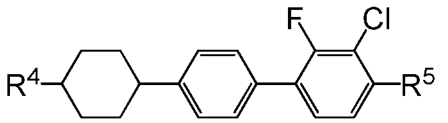

(3-13)

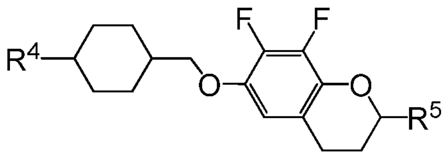

(3-14)

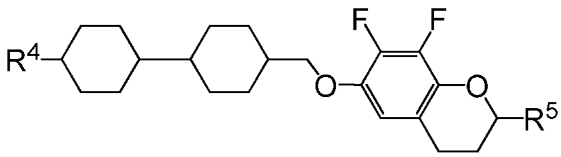

(3-15)

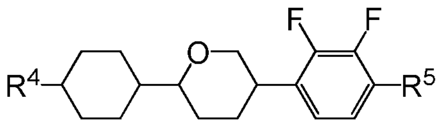

(3-16)

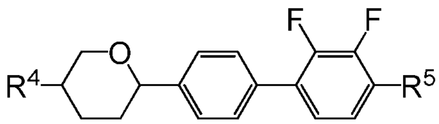

(3-17)

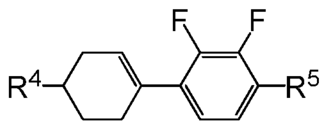

(3-18)

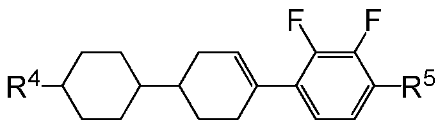

(3-19)

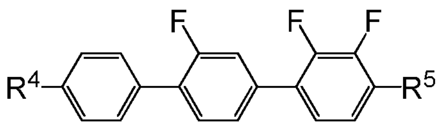

(3-20)

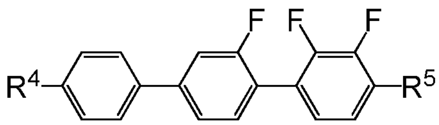

(3-21)

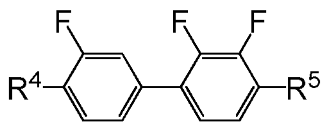

(3-22)

in formula (3-1) to formula (3-22), $R^4$ and $R^5$ are independently alkyl having 1 to 12 carbons, alkoxy having 1 to 12 carbons, alkenyl having 2 to 12 carbons or alkenyloxy having 2 to 12 carbons.

**9.** The liquid crystal composition for dimming according to claim 7 or 8, wherein the ratio of the third component is in the range of 3% by mass to 25% by mass.

**10.** The liquid crystal composition for dimming according to any one of claims 1 to 9, wherein the maximum temperature of a nematic phase (NI) is 90 °C or higher.

**11.** A liquid crystal dimming device having a liquid crystal layer, wherein the liquid crystal layer is a liquid crystal composition for dimming according to any one of claims 1 to 10.

**12.** The liquid crystal dimming device according to claim 11, wherein the liquid crystal layer is sandwiched between a pair of transparent substrates facing each other, the transparent substrate is a glass plate or an acrylic plate, the transparent substrate has a transparent electrode, and the transparent substrate may have an alignment layer.

**13.** The liquid crystal dimming device according to claim 11, wherein the liquid crystal layer is sandwiched between a pair of transparent substrates facing each other, the transparent substrate has a transparent electrode, the transparent substrate may have an alignment layer and the backside of one of the transparent substrates has a reflecting plate.

**14.** The liquid crystal dimming device according to claim 11, having a dimming material sandwiched between linear polarizers, wherein the dimming material has a laminated structure of a first film for a liquid crystal alignment layer, a liquid crystal layer and a second film for a liquid crystal alignment layer, and the first and second films for a liquid crystal alignment layer include a transparent plastic film substrate, a transparent electrode and an alignment layer.

**15.** A dimming window using the liquid crystal dimming device according to any one of claims 11 to 14.

**16.** A smart window using the liquid crystal dimming device according to any one of claims 11 to 14.

**17.** Use of the liquid crystal composition for dimming according to any one of claims 1 to 10, for a liquid crystal dimming device.

**18.** Use of the liquid crystal composition for dimming according to any one of claims 1 to 10, for a liquid crystal dimming device where a transparent substrate is a plastic film.

**19.** Use of the liquid crystal composition for dimming according to any one of claims 1 to 10, for a dimming window.

**20.** Use of a liquid crystal composition for dimming according to any one of claims 1 to 10, for a smart window.

**INTERNATIONAL SEARCH REPORT**

International application No.
PCT/JP2017/026281

A. CLASSIFICATION OF SUBJECT MATTER
*C09K19/30*(2006.01)i, *C09K19/12*(2006.01)i, *C09K19/14*(2006.01)i, *C09K19/20*(2006.01)i, *C09K19/32*(2006.01)i, *C09K19/34*(2006.01)i, *G02F1/13*(2006.01)i

According to International Patent Classification (IPC) or to both national classification and IPC

B. FIELDS SEARCHED

Minimum documentation searched (classification system followed by classification symbols)
C09K19/30, C09K19/12, C09K19/14, C09K19/20, C09K19/32, C09K19/34, G02F1/13

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2013-166936 A (Merck Patent GmbH), 29 August 2013 (29.08.2013), claims; paragraphs [0015], [0020], [0205]; examples & US 2013/0207038 A1 claims; paragraphs [0016], [0027], [0246]; examples & EP 2628779 A2 & KR 10-2013-0094251 A & CN 103320142 A & TW 201335343 A | 1-20 |
| X | JP 2005-290043 A (Dainippon Ink and Chemicals, Inc.), 20 October 2005 (20.10.2005), claims; paragraphs [0002], [0008], [0022], [0059] to [0061]; examples (Family: none) | 1-6,10-20 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>10 August 2017 (10.08.17) | Date of mailing of the international search report<br>22 August 2017 (22.08.17) |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

INTERNATIONAL SEARCH REPORT

International application No.
PCT/JP2017/026281

C (Continuation). DOCUMENTS CONSIDERED TO BE RELEVANT

| Category* | Citation of document, with indication, where appropriate, of the relevant passages | Relevant to claim No. |
|---|---|---|
| X | JP 2005-250223 A (Dainippon Ink and Chemicals, Inc.), 15 September 2005 (15.09.2005), claims; paragraphs [0015] to [0016], [0121] to [0124], [0130] to [0133]; examples (Family: none) | 1-6,10-20 |
| A | JP 4-128821 A (Dainippon Ink and Chemicals, Inc.), 30 April 1992 (30.04.1992), entire text (Family: none) | 1-20 |
| A | JP 2008-007754 A (Fujifilm Corp.), 17 January 2008 (17.01.2008), entire text & US 2007/0278449 A1 entire text | 1-20 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H03047392 A
- JP H08184273 A
- JP H07175045 A
- JP H02233626 A
- JP S59176221 A
- JP H02503441 A
- US 3660505 A


### Non-patent literature cited in the description


- Organic Syntheses. John Wiley & Sons, Inc,
- Organic Reactions. John Wiley & Sons, Inc,
- Comprehensive Organic Synthesis. Pergamon Press
- New experimental Chemistry Course. Shin-Jikken Kagaku Kouza. Maruzen Co., Ltd,
- **M. IMAI et al.** *Molecular Crystals and Liquid Crystals,* 1995, vol. 259, 37
- **J. HILFIKER ; B. JOHS ; C. HERZINGER ; J. F. ELMAN ; E. MONTBACH ; D. BRYANT ; P. J. BOS.** *Thin Solid Films,* 2004, vol. 455-456, 596-600